# EUROPÄISCHE PATENTSCHRIFT

(11) **EP 3 679 432 B1**
(45) Veröffentlichungstag und Bekanntmachung des Hinweises auf die Patenterteilung: **01.04.2026**
(21) Anmeldenummer: 18752131.5
(22) Anmeldetag: 03.08.2018
(51) Int. Cl.: G05B 19/12, B23K 26/38, G05B 19/418

(54) **VERFAHREN UND PRODUKTIONSSTATION ZUR KENNZEICHNUNG VON WERKSTÜCKEN MIT EINER MOBILEINHEIT**
METHOD AND PRODUCTION STATION FOR IDENTIFYING WORKPIECES WITH A MOBILE UNIT
PROCÉDÉ ET POSTE DE PRODUCTION PERMETTANT D'IDENTIFIER DES PIÈCES AU MOYEN D'UNE UNITÉ MOBILE

(30) Priorität: 05.09.2017 DE 102017215608
(43) Veröffentlichungstag der Anmeldung: 15.07.2020
(73) Patentinhaber: TRUMPF Werkzeugmaschinen SE + Co. KG, 71254 Ditzingen (DE)
(72) Erfinder: OTTNAD, Jens, 76199 Karlsruhe (DE); SCHNEIDER, Ulrich, 70563 Stuttgart (DE); SCHWARZ, Benjamin, 70825 Korntal-Münchingen (DE); WEISS, Korbinian, 70825 Korntal (DE)
(74) Vertreter: Trumpf Patentabteilung
(86) Internationale Anmeldenummer: PCT/EP2018/071162
(87) Internationale Veröffentlichungsnummer: WO 2019/048151

(56) Entgegenhaltungen:
- EP-A1- 2 450 283
- WO-A1-95/34865
- DE-A1- 102008 009 395
- JP-B2- 3 425 988
- US-A1- 2006 149 407
- US-A1- 2013 233 922

## Beschreibung

Die Erfindung betrifft ein Verfahren zur Kennzeichnung von Werkstücken, wobei eine Produktionsmaschine eine Vielzahl von Werkstücken produziert und die produzierten Werkstücke sortiert auf mehrere Werkstücksammeleinheiten verteilt werden. Die Erfindung betrifft weiterhin eine Produktionsstation für Werkstücke.

Blechteile aus Metall werden in vielfältiger Weise beim Bau von Maschinen und Geräten benötigt. Typische Produktionsmaschinen wie Laserschneidmaschinen oder Stanzmaschinen fertigen dabei meist aus einem Stück Metallblech eine Vielzahl von unterschiedlichen Typen von Werkstücken in kurzer Folge. Mittels einer Automatisierungsvorrichtung werden die Werkstücke auf Werkstücksammeleinrichtungen an Bereitstellungsorten verbracht, wo die Werkstücke eines jeweiligen Typs gesammelt werden, etwa auf einer Palette gestapelt werden.

Um den Materialfluss in einer komplexen Fertigungsanlage leicht weiterverfolgen zu können, sind Werkstückkennzeichnungen hilfreich, insbesondere bei kleinen Losgrößen, die viele händische steuernde Tätigkeiten erfordern. Typischerweise werden die Werkstücke auf einer jeweiligen Werkstücksammeleinrichtung mit einem Laufzettel versehen, auf dem wichtige Informationen über die bezeichneten Werkstücke enthalten sind, etwa Teiletyp, Auftragsnummer, zu durchlaufende Bearbeitungsstationen usw. Die Laufzettel werden meist manuell von einem Mitarbeiter an der Werkstücksammeleinrichtung angeordnet bzw. befestigt. Dieses Vorgehen ist zeitlich aufwändig, und es kann leicht zu Verwechslungen und damit falschen Teiledeklarationen durch den Mitarbeiter kommen. Zudem kann die Anbringung des Laufzettels schlicht vergessen werden, oder der Laufzettel kann verloren gehen.

Es ist auch möglich, Werkstücke unmittelbar zu beschriften, etwa mittels Gravieren oder Laserbeschriften. Dies ist aber zeitaufwändig (oft verbunden mit einer Hauptzeitunterbrechung), in der Regel irreversibel und kann nur wenige Informationen weitergeben.

Die JP 3 425 988 B2 offenbart ein Verfahren zum Laserschneiden von Werkstücken. Die Werkstücke werden dabei vor dem Trennen aus der Materialtafel mit einem Label versehen. Das Label kann die Produktnummer des Werkstücks aufweisen.

Die WO 95/34865 A1 offenbart ein System zum Sortieren und Entladen fertiger Werkstücke in einem flexiblen Fertigungssystem.

Weiterhin müssen Werkstücke oftmals manuell an den Bearbeitungsstationen angemeldet (gebucht) und abgemeldet werden. Darüber hinaus sind Produktionsaufträge im laufenden Fertigungsbetrieb nur schwer nachverfolgbar. Soll eine Änderung des Produktionsauftrages erfolgen, ist dies nur durch hohen manuellen und zeitlichen Einsatz erreichbar.

### Aufgabe der Erfindung

Der Erfindung liegt die Aufgabe zugrunde, auf einfache und kostengünstige Weise Werkstücke zu kennzeichnen und dadurch Produktionsaufträge transparenter und kontrollierbarer durchführen zu können.

### Kurze Beschreibung der Erfindung

Diese Aufgabe wird auf überraschend einfache und wirkungsvolle Weise gelöst durch ein Verfahren gemäß Patentanspruch 1 und eine Produktionsstation gemäß Patentanspruch 14. Die abhängigen Ansprüche geben bevorzugte Weiterbildungen wieder.

Im Rahmen der vorliegenden Erfindung ist es vorgesehen, eine Bereitstellungsvorrichtung für Kennzeichnungselemente mit der Automatisierungsvorrichtung zu koppeln, sodass bereitgestellte Kennzeichnungselemente von der Automatisierungsvorrichtung wie Werkstücke (Gutteile) gehandhabt (insbesondere ergriffen und/oder verfahren und/oder fallengelassen) werden können und jeweils zu den zu kennzeichnenden Werkstücken der zugehörigen Werkstücksammeleinheiten (bzw. Bereitstellungsorten) verbracht bzw. zusortiert werden können. Dadurch kann die Automatisierungsvorrichtung, die für den Transport der produzierten Werkstücke von der Produktionsmaschine zu den Werkstücksammeleinheiten ohnehin notwendig ist, auch für den Transport der Kennzeichnungselemente zu den Werkstücksammeleinheiten verwendet werden. Dazu müssen die von der Bereitstellungsvorrichtung bereitgestellten Kennzeichnungselemente lediglich im Arbeitsbereich der Automatisierungsvorrichtung zur Verfügung gestellt werden, was in der Regel einfach (insbesondere automatisch) möglich ist, und mechanisch für eine Handhabung durch die Automatisierungsvorrichtung geeignet bzw. ausgebildet sein (etwa bezüglich einer Mindestgröße von Klemmkanten für die Anlage von Klemmbacken oder von einer ebenen Ansaugfläche für die Anlage eines Sauggreifers). Die Automatisierungsvorrichtung wird wie bei der Zusortierung der Werkstücke auch bei der Zusortierung der Kennzeichnungselemente angesteuert, so dass die Zuordnung der Kennzeichnungselemente jeweils zur gewünschten Werkstücksammeleinheit (bzw. Bereitstellungsort) praktisch ohne Mehraufwand möglich ist. Eine separate Maschine zum Zusortieren der Kennzeichnungselemente oder zum Anordnen der Kennzeichnungselemente auf den Werkstücksammeleinheiten ist nicht nötig.

Im Allgemeinen nimmt die Bereitstellungsvorrichtung Kennzeichnungselemente aus einem Vorrat auf, die zunächst weder direkt noch indirekt Informationen über Werkstücke tragen; nach der Verarbeitung in der Bereitstellungsvorrichtung sind die Informationen über die Werkstücke auf den zugehörigen Werkstücksammeleinheiten direkt oder indirekt durch die bereitgestellten Kennzeichnungselemente verfügbar. Allgemein trägt die Bereitstellungsvorrichtung zur Niederlegung der Informationen auf den Kennzeichnungselementen und/oder zur Zuordnung der Informationen zu den Kennzeichnungselementen bei, typischerweise in Verbindung mit einer Steuerungsvorrichtung und/oder einer Datenbank.

Die Bereitstellungsvorrichtung kann eine Schreibvorrichtung umfassen, mit der die Kennzeichnungselemente mit den Informationen über die Werkstücke direkt beschrieben werden. Die Schreibvorrichtung kann alternativ oder zusätzlich eine Zuordnungskennzeichnung (etwa einen alphanumerischen Code) für diese Informationen auf die Kennzeichnungselemente schreiben. Die "bereitgestellten Kennzeichnungselemente" können dann auch als "beschriebene Kennzeichnungselemente" bezeichnet werden.

Die Bereitstellungsvorrichtung kann alternativ oder zusätzlich dazu auch eine Ermittlungsvorrichtung (oder Erkennungsvorrichtung) umfassen, die eine bereits auf den Kennzeichnungselementen (fest) abgelegte Zuordnungskennzeichnung (etwa einen alphanumerischen Code) ermittelt. Die Ermittlungsvorrichtung kann die bereits auf den Kennzeichnungselementen abgelegte Zuordnungskennzeichnung mit einer Lesevorrichtung auslesen. Alternativ oder zusätzlich dazu kann die Ermittlungsvorrichtung die bereits auf den Kennzeichnungselementen abgelegte Zuordnungskennzeichnung indirekt ermitteln, etwa durch Abzählen der Kennzeichnungselemente. Die Kennzeichnungselemente können dazu in einer vorbestimmten Reihenfolge der Bereitstellungsvorrichtung zugeführt werden, wobei die Zuordnung der Kennzeichnungselemente-Reihenfolge zu ihrer Zuordnungskennzeichnung einer übergeordneten Steuerungsvorrichtung, insbesondere mit einer externen Datenbank, oder der Bereitstellungsvorrichtung bekannt ist. So lässt sich eine Schreib- oder Lesevorrichtung sparen. Informationen zu den Werkstücken können den Kennzeichnungselementen (oder Maschinen oder Menschen) unter Verwendung der Zuordnungskennzeichnung noch später übermittelt werden, z. B. wenn die Kennzeichnungselemente ein eigenes Steuermodul mit einem Empfänger aufweisen. Auf diese Weise wird jedes Kennzeichnungselement der zugehörigen Werkstücksammeleinheit mittels einer Zuordnungskennzeichnung eindeutig zugeordnet.

Mittels der zusortierten Kennzeichnungselemente werden die verschiedenen Werkstücke auf den Werkstücksammeleinheiten kenntlich gemacht und können in darauffolgenden Fertigungsschritten eindeutig identifiziert, zugeordnet und wiedergefunden werden. Beispielsweise kann für die Werkstücke an der darauffolgenden Fertigungsstation das passende Fertigungsprogramm leicht ermittelt und geladen werden.

Zusammenfassend können die vorhandenen Automatisierungsachsen synergetisch genutzt werden, und der mechanische Aufwand zur Integration, insbesondere der Bereitstellungsvorrichtung, ist gering. Eine Nachrüstung des Verfahrens bei einer vorhandenen Produktionsmaschine-Automatisierungsvorrichtung-Kombination ist einfach möglich. Die Zusortierung der Kennzeichnungselemente kann weitgehend oder sogar vollständig hauptzeitparallel erfolgen. Mit dem Kennzeichnungselement kann eine Informationslücke zwischen Cloud, EPR-System und Produktionsmaschine geschlossen werden.

Eine Werkstücksammeleinheit kann beispielsweise eine Palette oder ein Teilbereich einer Palette sein, wo die Werkstücke abgelegt und aufeinander gestapelt werden ("Stapelplatz"); ggf. können auf einer Palette auch mehrere Stapelplätze und somit mehrere Werkstücksammeleinheiten eingerichtet sein. Ebenso kann eine Werkstücksammeleinheit eine Palette sein, auf der mehrere Werkstücke nebeneinander abgelegt werden. Eine Werkstücksammeleinheit kann auch als ein Behälter ausgebildet sein, in den Werkstücke eingeworfen werden. In der Regel werden auf einer Werkstücksammeleinheit nur Werkstücke gleichen Typs angeordnet. Mehrere Werkstücksammeleinheiten können für eine gemeinsame Handhabung (insbesondere Transport) auf einer gemeinsamen Werkstücksammeleinrichtung zusammengefasst sein. Eine Werkstücksammeleinrichtung kann beispielsweise eine Palette mit mehreren Stapelplätzen sein. Eine Werkstücksammeleinrichtung kann auch ein Rollwagen sein, auf dem mehrere Behälter angeordnet oder ausgebildet sind.

Typischerweise werden parallel zueinander wenigstens fünf Werkstücksammeleinheiten mit Werkstücken beschickt und jeweils mit einem Kennzeichnungselement versehen (meist abschließend). Die Werkstücksammeleinheiten an ihren Bereitstellungsorten werden nach fertiger Beschickung mit Werkstücken durch leere Werkstücksammeleinheiten ersetzt.

Die Kennzeichnungselemente sind typischerweise standardisiert (d.h. für eine Vielzahl, meist alle vorkommenden, Typen von Werkstücken gleich) und umfassen einen Träger, auf den die Informationen und/oder eine Zuordnungskennzeichnung geschrieben werden (etwa mittels eines Aufdrucks, oder auch elektronisch) und/oder auf dem eine Zuordnungskennzeichnung fest hinterlegt (etwa aufgedruckt oder programmiert) ist. An der Bereitstellungsvorrichtung ist typischerweise eine Vielzahl von Kennzeichnungselementen bevorratet.

Typischerweise produziert die Produktionsmaschine in rascher Folge Werkstücke unterschiedlichen Typs, die von der Automatisierungsvorrichtung den Werkstücksammeleinheiten laufend zusortiert werden.

Die Automatisierungsvorrichtung kann mehrere Komponenten umfassen, mit denen jeweils nur einen Teil des Transportwegs zurückgelegt wird, und/oder die für unterschiedliche Werkstücktypen zuständig sind. Im Rahmen der Erfindung können insbesondere folgende zwei Verfahren der automatisierten Werkstücksortierung einzeln oder in Kombination angewandt werden:
1. Werkstücke werden mit Greifern geholt und auf Paletten gestapelt.
2. Werkstücke werden in Behälter/Kisten fallen gelassen.

Bei einer Kombination werden typischerweise kleinere Werkstücke/Teile (meist Schüttgut) sortiert in die Kisten abgeworfen, und größere Werkstücke/Teile auf einer Palette gestapelt. Die Werkstücke sind beispielsweise formgeschnittene Teile, etwa Blechteile. Die Automatisierungsvorrichtung umfasst beispielsweise einen Sauggreifer, oder auch eine Werkstückzwischenablage mit nachgeordneter Werkstückrutsche und Werkstücktransportwagen mit Auswurfklappe.

Die Informationen über die (in der Regel gleichartigen) Werkstücke auf einer Werkstücksammeleinheit umfasst beispielsweise die Art der Werkstücke (meist als Typennummer), die Produktionszeit (meist als Produktionsdatum), einen Produktionsort (etwa die Angabe des Werks oder einer Produktionslinie), eine Auftragskennung (meist eine Auftragsnummer), einen Auftraggeber (Kunde) und/oder Produktionsablaufinformationen (etwa eine nächste Bearbeitungsstation).

Das Kennzeichnungselement ist im einfachsten Fall mit einer Farbe bedruckt, um die Informationen darzustellen. Das Kennzeichnungselement kann auch eine Anzeige in Form eines elektronischen Papiers aufweisen, eine so genannte E-Ink-Anzeige. Diese Anzeige kann durch elektromagnetische Signale verändert werden. So können auf dem Kennzeichnungselement die Informationen über die Werkstücke auf einer Werkstücksammeleinheit (bzw. der den Werkstücken oder der Werkstücksammeleinheit zugeordnete Auftrag) angezeigt werden.

Ein Kennzeichnungselement kann dafür selbst ein Steuerungselement (Steuermodul) für die eine Anzeige (insbesondere E-Ink-Anzeige) aufweisen.

Die Kennzeichnungselemente sind in Form von Mobileinheiten zum Aussenden und Empfangen von elektromagnetischen Signalen an bzw. von Sende-Empfangseinheiten ausgebildet. Aus Laufzeiten der elektromagnetischen Signale zwischen den Sende-Empfangseinheiten und den Kennzeichnungselementen ist die Position der Mobileinheiten bestimmbar. Dies vereinfacht signifikant die Produktionsabläufe, da die Mobileinheiten lokalisierbar sind. Produktionsaufträge können hierdurch leichter überwacht und geändert werden. Darüber hinaus kann ein großer Teil des Zeitaufwands zum Buchen der Werkstücke an den Bearbeitungsstationen entfallen.

Die Kennzeichnungselemente können zum Aussenden und Empfangen von elektromagnetischen Signalen in Form von Ultra-Wideband-Signalen (UWB) ausgebildet sein. Hierdurch kann die Lokalisierung der Mobileinheiten besonders präzise erfolgen.

Weiter bevorzugt weisen die Mobileinheiten jeweils ein Gehäuse in Form einer flachen Box auf.

In besonders bevorzugter Ausgestaltung des erfindungsgemäßen Verfahrens werden elektromagnetische Signale zwischen zumindest einem Kennzeichnungselement und einer Sende-Empfangseinheit übermittelt. Auf Grundlage der Laufzeiten der elektromagnetischen Signale zwischen den Sende-Empfangseinheiten und dem Kennzeichnungselement wird die Position des Kennzeichnungselements bestimmt.

Mittels einer Innenraum-Ortung und eines Innenraum-Ortungssystem kann die Positionsbestimmung der Kennzeichnungselemente allein durch eine Analyseeinheit, also ohne manuelle Interaktion, erfolgen kann. Bisherige Systeme zur Ortung von Werkstücken oder Aufträgen in Fertigungsstätten haben den Nachteil, dass verloren gegangene Werkstücke oder Aufträge manuell gesucht werden müssen. Man hat erkannt, dass diese manuellen Suchvorgänge , insbesondere in Fertigungsstätten mit einer hohen Anzahl von kleinen und ständig wechselnden Aufträgen, also z.B. in Lohnfertigungsstätten, einen enorm hohen Anteil der nichtproduktiven Zeit ausmachen. Mit der erfindungsgemäßen Ortung und dem beschriebenen System können die Positionen der Werkstücke und damit der Aufträge z. B. auf einem Bildschirm aufgerufen, gefiltert oder gezielt lokalisiert werden. Die Notwendigkeit von zeitaufwändigen manuellen Suchvorgängen von Werkstücken, aber auch von Werkzeugen oder Personen, kann so insbesondere in der (stahl- und/oder blechverarbeitenden) industriellen Fertigung drastisch verringert werden.

Die hierin offenbarten Konzepte basieren auf der Verwendung eines 2D-/3D-Innenraum (in-door)-Ortungssystems als Ausgangsbasis für die ortsabhängige Informationsverarbeitung. Das Ortungssystem, insbesondere die Kennzeichnungselemente, können optional mit weiterer Sensorik, zum Beispiel mit Beschleunigungs- und/oder Lagesensoren, ausgestattet sein und so ferner als Ausgangsbasis für eine lageabhängige Informationsverarbeitung dienen. Dadurch wird insbesondere eine orts- (und gegebenenfalls lage-) abhängige Interaktion im Rahmen des 2D-/3D-Innenraum-Ortungssystems bei der Fertigungssteuerung sowie eine Optimierung von Fertigungsvorgängen möglich. Beispielsweise können virtuelle Schranken (Gates) und Zonen eingesetzt werden, um einen Fertigungsprozess und nachfolgende Produktionsschritte automatisiert zu überwachen und zu steuern.

Dies kann insbesondere in Echtzeit erfolgen.

Es wurde erkannt, dass der Einsatz derartiger Ortungssysteme bei Berücksichtigung der zu erwartenden Prozessvorgänge in einer Fertigungshalle auch im speziellen Umfeld einer stahl- und/oder blechverarbeitenden Industriefertigung möglich ist. Entsprechend können derartige Ortungssysteme in ein Fertigungssteuerungssystem (hierin auch als MES (Manufacturing Execution System) bezeichnet) integriert werden. Durch die Berücksichtigung der zu erwartenden Prozessvorgänge in einer Fertigungshalle wird der Einsatz derartiger Ortungssysteme z. B. trotz des vorhandenen Stahls und Blechs möglich, obwohl metallische Werkstücke die verwendeten elektromagnetischen Signale reflektieren und abschirmen können. Der Einsatz ist auch dann noch möglich, wenn die metallischen Werkstücke überdies noch örtlich bewegt werden und sich so die Reflexionsflächen ständig in ihrer Position und Ausrichtung ändern.

Beim Einsatz von 2D-/3D-Innenraum-Ortungssystemen kann eine Komplexität bei der aufwandsarmen, dynamischen Zuordnung von gewonnener Ortsinformation zu physischen Komponenten entstehen. Die hierin offenbarten Konzepte adressieren diese Komplexität und erlauben es beispielsweise, Produktionsaufträge mit zugeordneter Kennung ohne aufwändige Interaktion einer Mobileinheit, mit der zuzuordnende Ortsinformation gewonnen wird, zuzuordnen.

Innenraum-Ortungssysteme erlauben die detaillierte Abbildung von Materialflüssen in der Fertigung innerhalb einer Fertigungshalle in die digitale Prozessverarbeitung. Die Ortungssysteme vereinfachen dabei die Lokalisierung der an der Fertigung teilnehmenden Objekte/Personen im Produktionsumfelds. Werden Werkzeuge, Betriebsmittel oder Ladungsträger initial einmal mit einem lokalisierbaren Kennzeichnungselement des Ortungssystems ausgestattet, sind diese im digitalen Steuerungssystem manuell oder automatisiert entsprechend digitaler Information zuzuordnen. Dies bezieht sich auch auf temporär an der Fertigung beteiligte Objekte wie beispielsweise Produktionsaufträge oder Servicepersonal. Temporär benötigte dynamische Zuordnungen können immer wieder neu entstehen und werden nur wenige Stunden, Tage oder Wochen in der Fertigungshalle benötigt. Um die dynamische Zuordnung der Kennzeichnungselemente zu neuen Produktionsaufträgen aufwandsarm und zuverlässig zu ermöglichen und sicherzustellen, können die hierin vorgeschlagenen Prozesshilfen verwendet werden.

Die Innenraum-Positionsbestimmung kann mit den hierin offenbarten Verfahren auf unter 30 cm, insbesondere unter 10 cm, Genauigkeit in einer von GPS-Satellitensignalen nicht erreichbaren Fertigungshalle mit einem Grundriss im Bereich von z. B. 1 ha erfolgen. Diese Genauigkeit ist mit anderen Techniken (Bluetooth, WiFi, WLAN, Infrarot, Mobilfunk, RFID) im Wesentlichen nicht möglich. Bei der Ortung von Werkstücken, Aufträgen, Personen (z. B. Bearbeitern) und/oder Werkzeug sind viele Anforderungen zu berücksichtigen. Man hat erkannt, dass sich die industrielle Fertigung mehr und mehr auf Fertigung von Kleinserien mit vielen einzelnen Arbeitsschritten (Fertigungsprozesse wie z.B. Schneiden, Biegen, Schleifen, Oberflächenbehandlung) an unterschiedlichen Arbeitsplätzen wie Maschinenarbeitsplätze und manuelle Arbeitsplätze einrichtet. So sind oftmals mehrere hundert unterschiedliche Aufträge an einem Tag zu erledigen, die alle unterschiedliche Arbeitsschritte erfordern. Sobald nur eine Störung auftritt, kann die Fertigungssteuerung sehr schnell sehr unübersichtlich werden. Zeitaufwändig werden halb oder noch gar nicht bearbeitete Aufträge in der Fertigungshalle durch einzelne Personen gesucht und deren Status ermittelt. Dieser wird dann an die Fertigungssteuerung übermittelt. Das kann zu einem erheblichen Zeitverlust bei der eigentlichen Fertigung führen.

Durch die immer schneller werdenden Verarbeitungsschritte bei der produktiven Bearbeitung und bei der Erhöhung der Anzahl unterschiedlicher Aufträge mit immer kleinerer Anzahl von Gleichteilen, können derartige Ausfälle immer häufiger auftreten. Die dadurch verursachten Zeitausfälle reduzieren die produktive Zeit. Sollen Aufträge, Werkstücke, Personen, z. B. Bearbeiter, und Werkzeuge schnell aufgefunden werden, ist die hierin offenbarte Ortung zumindest einzelner dieser Einheiten hilfreich, Fehlzeiten zu reduzieren. Insbesondere erfüllt sie die sehr hohen Anforderungen für eine Industriefertigung.

Bei der Industriefertigung ist eine Ortung in Echtzeit angestrebt. Sie soll örtlich so genau sein, dass Mobileinheiten sicher gefunden und/oder den Bearbeitungsschritten zugeordnet werden können. Dazu hat sich herausgestellt, dass eine Ortung, die nur auf 1 m genau ist, nicht aus-reicht. Auch ist eine Ortung, die bei jeder Veränderung des Abstrahlungsverhaltens elektro-magnetischer Wellen, verursacht z. B. durch Bewegung von metallischen Werkstücken in der Fertigungshalle, neu kalibriert werden müsste, nachteilig und oft nicht einsetzbar. Die Ortung soll zudem flexibel sein, mehrere Aufträge sollten zu einem Auftrag zusammenfassbar sein, ein Auftrag sollte aufteilbar in mehrere Aufträge sein etc. Die Ortung sollte einfach zu bedienen sein. Sie sollte ausfallsicher sein.

Allgemein können die hierin offenbarten Konzepte eine Erhöhung der Prozesssicherheit, eine Optimierung von Durchlaufzeiten und entsprechend eine Kostenoptimierung der Produktion ermöglichen. Im Speziellen können die hierin offenbarten Konzepte eine z. T. erhebliche Zeiteinsparung im Fertigungsprozess bewirken, wobei sich der Fertigungsprozess z. B. von der Herstellung einer erforderlichen Stückzahl von Teilen bis zur korrekten Weitergabe an einen Nachfolgeprozess (z. B. einen nachfolgenden Metallbearbeitungsschritt) erstreckt. Mehrere Aufträge können ferner quasi gleichzeitig prozesssicher umgesetzt werden. Die hierin offen-barten Konzepte erlauben ferner eine einfache Zuordnung von Werkstücken im Rahmen des Ortungssystems. So können offene Aufträge trotz der Komplexität von mehreren gleichzeitig zu bearbeitenden Aufträgen optimiert werden.

Ferner kann eine flexible Abarbeitung verschiedener Prozessabläufe mit der begleitenden Zeiteinsparung erfolgen, wenn Maschinen wie Laserschneidmaschinen und/oder Stanzmaschinen in den teilautomatisierten Herstellungsprozess eingebunden werden. Ferner kann die Fehlervermeidung und die automatische, korrekte Verbuchung von Werkstücken, Bearbeitungsschritten etc. die Basis für eine datenbasierte Echtzeitsteuerung der Metallverarbeitung (z. B. der Stahl- und Blechfertigung) legen. Entsprechend werden auch Werkzeugmaschinen, die bei der Erstellung von kleinen Losgrößen von Werkstücken eingesetzt werden, in eine von einem MES im Rahmen der Industrie 4.0 gesteuerte Fertigung einbindbar.

Hierin beschriebene Aspekte basieren zum Teil auf der Erkenntnis, dass mit der Genauigkeit und der Zuverlässigkeit neuer insbesondere auf der UWB-Technologie basierender Ortungssysteme, beispielsweise mit einer Genauigkeit in der Ortsbestimmung von kleiner 30 cm, insbesondere kleiner 10 cm, der Einsatz von Innenraum-Ortungssystemen im Rahmen der industriellen Fertigung sinnvoll möglich wird.

Die hierin offenbarten, für die Integration in die industrielle Fertigung vorgesehenen Ortungssysteme basieren auf Mobileinheiten (hierin auch als "Tags" oder "Kennzeichnungselemente" bezeichnet) und stationären Sende-Empfangseinrichtungen (hierin auch als "Anker" oder "Anchors" bezeichnet). Bei der Integration in die industrielle Fertigung wird zur Positionsbestimmung eines Werkstücks, allgemein eines Gegenstands ("Assets"), dieses jeweils mit mindestens einer Mobileinheit versehen bzw. mit dieser funktionell oder räumlich in Bezug gesetzt (hierin auch als physische oder räumliche Zuordnung bezeichnet). Die Mobileinheiten sind allgemein elektronische Bauteile, die dazu in der Lage sind, mit den Sende-Empfangseinrichtungen, insbesondere mittels UWB-Kommunikationstechnologie, zu kommunizieren. Jede Mobileinheit kann zur Feststellung von Laufzeiten über eine eigene Zeitbestimmungseinheit ("Clock") verfügen.

Das Ortungssystem kann mehrere Sende-Empfangseinheiten und mindestens eine Mobileinheit aufweisen. Das Ortungssystem kann ferner mit dem MES zusammenwirken. Beispielsweise kann eine Analyseeinheit des Ortungssystems als ein Teil des MES ausgebildet sein.

Die Sende-Empfangseinheiten können dazu eingerichtet sein, an die Mobileinheiten UWB-Radiosignale zu senden und von diesen UWB-Radiosignale zu empfangen.

Der Abstand zwischen einer örtlich beweglichen Mobileinheit und einer z. B. fest installierten Sende-Empfangseinheit, kann durch die Zeit bestimmt werden, die das Signal zum Überwinden der Distanz zwischen den beiden Einheiten benötigt. Werden die Distanzen von mehreren Sende-Empfangseinheiten ermittelt, deren Ort jeweils bekannt ist, kann der räumliche Ort der Mobileinheit in Bezug zu den Sende-Empfangseinheiten z. B. durch Triangulation bestimmt werden.

Für eine Laufzeitbestimmung können die Sende-Empfangseinheit und die Mobileinheit(en) über hochgenaue Uhren verfügen, die die Zeit auf wenige oder sogar nur Bruchteile von ns genau bestimmen können. Auch wenn die Uhren in der Sende-Empfangseinheit und in der Mobileinheit hochgenau sind, so sind die Uhren noch nicht zwingend synchronisiert. Es können unterschiedliche Verfahren der Synchronisation von Uhren oder der Elimination von Fehlern folgend aus dem asynchronen Uhrenverlauf eingesetzt werden. So kann beispielsweise eine der Sende-Empfangseinheiten, z. B. als Master-Positionsbestimmungseinheit, ein Signal zu einer ersten Zeit T1 versenden und ein zweites Signal zu einer zweiten Zeit T2. Der Mobileinheit kann der Zeitunterschied T2-T1 bekannt sein oder zusammen mit den Signalen übermittelt werden, so dass sie sich auf die Zeit der Sende-Empfangseinheiten synchronisieren kann. Alternativ kann die Mobileinheit zwei Signale in einem vorbekannten zeitlichen Abstand Ta senden. In diesem Fall kann die Sende-Empfangseinheit anhand ihrer eigenen Zeitmessung mit ihrer eigenen Uhr vom Empfang des ersten Signals bis zum Empfang des zweiten Signals die Synchronisationsabweichung ermitteln und aus der Distanzmessung herausrechnen. Der zeitliche Abstand zwischen dem ersten Signal und dem zweiten Signal sollte gering sein, sodass sich die Mobileinheit in dieser Zeit nicht örtlich wesentlich bewegt hat. Der zeitliche Abstand kann von der Mobileinheit so gewählt werden, dass er ein vorgegebenes Vielfaches oder ein vorgegebener Bruchteil der Zeit ist, die die Mobileinheit benötigt vom Empfang eines Signals, auf das es antworten soll, bis zur Ausgabe des ersten Signals.

Die Sende-Empfangseinheiten 13 können ferner über kabellose oder kabelgebundene Kommunikationsverbindungen mit der Analyseeinheit verbunden sein.

Die Mobileinheiten können beispielsweise nur über die Sende-Empfangseinheiten kommunizieren. Alternativ oder zusätzlich können sie eigenständig über weitere Kommunikationsverbindungen (zum Beispiel eine WLAN-Verbindung) mit der Analyseeinheit / dem MES kommunizieren.

Allgemein kann die Datenkommunikation der Sende-Empfangseinheiten und der Mobileinheiten mit einem Fertigungssteuerungssystem, insbesondere mit dem MES , bidirektional möglich sein.

In einigen Ausführungsformen können WLAN-Sendestationen in die Sende-Empfangseinheiten des Ortungssystems für einen Datenzugang in das Fertigungssteuerungssystem integriert werden, sodass über die Sende-Empfangseinheiten digitale Daten in der Fertigungshalle mobil z. B. über Smartphones oder Tablets zugänglich sind. Die Integration der WLAN-Sendestationen in die Sende-Empfangseinheiten kann die Installation und das Betreiben eines Datenkommunikationssystems in der Fertigungshalle vereinfachen.

Die UWB-Technologie nutzt Frequenzbereiche von z.B. 3 GHz bis 5 GHz, wobei die UWB-Technologie einen relativ großen Frequenzbereich zur Ausbildung von zeitlich scharf begrenzten Signalverläufen (Kommunikationsrahmen) nutzt. Um nämlich ein Objekt, das Radiowellen aussendet, möglichst exakt lokalisieren zu können, benötigt man ein Signal mit sehr steilen Flanken. D.h., das Signal stellt eher einen rechteckförmigen Signalverlauf über die Zeit dar als einen sinusförmigen Verlauf. Dazu benötigt man ein Signal, bei dem mehrere sinusförmige Signale mit unterschiedlichen Frequenzen überlagert sind. Denn aus mehreren Sinussignalen mit unterschiedlichen Frequenzen kann eine Signal geformt werden, das eine steile Flanke besitzt und einem im Wesentlichen rechteckförmigen Verlauf über die Zeit angenähert werden kann. Das bedeutet, dass mehrere Frequenzen aus einem breitbandigen Frequenzspektrum zur Verfügung stehen müssen, um ein Signal zu formen. Entsprechend eignet sich für die exakte Lokalisierung insbesondere die UWB-Technologie, die über ein breitbandiges Frequenzspektrum verfügt. Die Technologie und die verwendbaren Frequenzbänder der UWB-Technik sind beispielsweise in dem Standard "IEEE 802.15 -2015" beschrieben.

Falls das Kennzeichnungselement von der Bereitstellungsvorrichtung mit einer Zuordnungskennzeichnung beschrieben wird oder bereits eine Zuordnungskennzeichnung trägt, die über die Bereitstellungsvorrichtung ermittelt wird und den Informationen über die Werkstücke in einer Datenbank zugeordnet wird, werden typischerweise anschließend vom Kennzeichnungselement mittels der Zuordnungskennzeichnung die Informationen über die Werkstücke auf der Werkstücksammeleinheit über eine Datenverbindung zu der Datenbank (meist über eine übergeordnete Steuerungsvorrichtung, insbesondere mit einer externen Datenbank), eingeholt und sodann angezeigt, etwa auf einer E-Ink-Anzeige, und/oder für eine maschinelle Auslesung bereitgehalten. Ebenso können bei Bedarf von Maschinen oder Menschen die Information mittels der Zuordnungskennzeichnung aus der Datenbank abgerufen werden. Die Zuordnungskennzeichnung stellt somit indirekt die Informationen über die Werkstücke auf der Werkstücksammeleinheit dar bzw. bereit.

Ferner kann als exponiertes Element der menschenlesbaren Information eine LED auf dem Kennzeichnungselement vorgesehen werden. Diese kann beispielsweise dem Menschen durch unterschiedliche Farben, Blinkfrequenzen oder Blinkmuster codierte Informationen visuell mitteilen. Eine insbesondere blinkende LED ist auch auf große Entfernungen leichter zu erkennen, als z. B eine Anzeige. Deswegen hat eine Signalvorrichtung wie eine LED besondere Vorteile, wenn z. B. ein Kennzeichnungselement gesucht wird. Sie kann von einem Bediener ferngesteuert adressiert werden und sich dann mit einer Signalvorrichtung bemerkbar machen. Zusätzlich oder alternativ kann sie ein Geräuschsignal abgeben. Eine solche ferngesteuerte Adressierung kann beispielsweise durch eine weitere Mobileinheit oder über eine sonstige insbesondere tragbare Vorrichtung, z. B. Smartphone, Tablet, oder über die Analyseeinheit erfolgen. Sie kann aber auch direkt, z. B. über Nahfeldsender (z. B. Bluetooth, NFC, IR), erfolgen.

Das Kennzeichnungselement kann ferner einzelne oder mehrere verschiedene Sensoren zur Ermittlung der Lage, der Beschleunigung, der Bewegung im Raum mittels Gyrosensor, der Temperatur, Magnetfeld, elektrisches Feld, der Feuchte, der Helligkeit, Schall, Vibrationen etc. umfassen. Diese können für zusätzliche Funktionen genutzt werden.

### Varianten zur Funktion der Bereitstellungsvorrichtung

Bevorzugt ist eine Variante des erfindungsgemäßen Verfahrens, bei dem die Bereitstellungsvorrichtung die bereitzustellenden Kennzeichnungselemente jeweils direkt mit den Informationen über die Werkstücke beschreibt. Das direkte Beschreiben (mit optisch sichtbaren Schriftzeichen oder auch elektronisch) ist besonders einfach und gestattet einen unmittelbaren Zugriff auf die Informationen, ohne Zugriff auf eine Steuervorrichtung oder (externe) Datenbank.

Vorteilhaft ist eine Variante, die vorsieht, dass die von der Bereitstellungsvorrichtung bereitgestellten Kennzeichnungselemente jeweils eine individuelle Zuordnungskennzeichnung tragen, und dass in einer Datenbank den Zuordnungskennzeichnungen der bereitgestellten oder bereitzustellenden Kennzeichnungselemente jeweils die Informationen über die Werkstücke auf den Werkstücksammeleinheiten zugeordnet werden. Die Zuordnungskennzeichnungen tragen somit indirekt die Informationen über die Werkstücke auf den Werkstücksammeleinheiten. Nach Ablesen oder Auslesen der Zuordnungskennzeichnung eines Kennzeichnungselements können aus der Datenbank die zugeordneten Informationen über die Werkstücke abgerufen werden. Dadurch kann eine große Menge von Informationen, die insbesondere nicht durch die bedruckbare Größe oder programmierbare Kapazität des Kennzeichnungselements beschränkt ist, verfügbar gemacht werden. Zudem können in der Datenbank die Informationen einfach aktualisiert werden, falls gewünscht. Sofern das Kennzeichnungselement dafür ausgestattet ist (etwa mit einem eigenen Steuerungsmodul und einem Empfänger), kann dieses später auch selbst die zugeordneten Informationen (ganz oder teilweise) mittels seiner Zuordnungskennzeichnung abrufen (bspw. über ein WLAN), insbesondere um die Informationen auf einem Display des Kennzeichnungselements anzuzeigen. Wichtig ist dabei die eindeutige Zuordnung der Kennzeichnungselemente mittels der Zuordnungskennzeichnung zu den zugehörigen Werkstücksammeleinheiten, die unter Mitwirkung der Bereitstellungsvorrichtung erfolgt.

In einer vorteilhaften Weiterentwicklung dieser Variante werden die bereitzustellenden Kennzeichnungselemente von der Bereitstellungvorrichtung jeweils mit einer Zuordnungskennzeichnung beschrieben. Dies ist besonders einfach und zuverlässig. Die Kennzeichnungselemente benötigen insbesondere keine vorherige Präparation mit einer festen Zuordnungskennzeichnung und/oder mit einer bekannten Ordnung.

Ebenso ist es in einer vorteilhaften Weiterentwicklung möglich, mittels der Bereitstellungsvorrichtung jeweils eine auf den bereitzustellenden Kennzeichnungselementen fest hinterlegte Zuordnungskennzeichnung auszulesen. In diesem Fall wird keine Schreibvorrichtung an der Bereitstellungsvorrichtung benötigt. Die fest hinterlegte Zuordnungskennzeichnung kann auch bei einer mehrmaligen Verwendung des Kennzeichnungselements jeweils erneut genutzt werden.

Eine andere Weiterentwicklung sieht vor, dass die Bereitstellungsvorrichtung die bereitzustellenden Kennzeichnungselemente einem Vorrat entnimmt, in welchem Kennzeichnungselemente mit bekannten, fest hinterlegten Zuordnungskennzeichnungen in einer bekannten Ordnung gelagert sind, insbesondere wobei die Kennzeichnungselemente des Vorrats einen Stapel bilden, und dass eine Zuordnungskennzeichnung für ein bereitzustellendes Kennzeichnungselement mittels einer Entnahmeinformation ermittelt wird, wobei die Entnahmeinformation die Position des bereitzustellenden Kennzeichnungselements bezüglich der bekannten Ordnung beschreibt, insbesondere wobei die Entnahmeinformation ein Zählindex der von dem Stapel genommenen Kennzeichnungselemente ist. In diesem Fall benötigt die Bereitstellungsvorrichtung weder eine Lesevorrichtung noch eine Schreibvorrichtung für die Kennzeichnungselemente. Über die Entnahmeinformation und die typischerweise in der Datenbank hinterlegte bekannte Ordnung kann eine Zuordnung der Informationen über die Werkstücke zur Zuordnungskennzeichnung des Kennzeichnungselements erfolgen.

Die Bereitstellungsvorrichtung beschreibt das Kennzeichnungselement für Menschen lesbar. Sie kann auch das Kennzeichnungselement maschinenlesbar beschreiben. Durch eine maschinenlesbare Beschriftung können nachfolgende Automatisierungsprozesse vereinfacht werden. Eine für Menschen lesbare Beschriftung ermöglicht die Identifikation der Werkstücke ohne weitere Hilfsmittel. Zum maschinenlesbaren Beschreiben kann ein RFID-Chip programmiert werden, oder auch ein Barcode oder ein QR-Code aufgedruckt werden. Für Menschen lesbares Beschreiben erfolgt durch entsprechendes Ansteuern einer elektronischen Anzeige (z.B. ein E-Paper, E-Ink).

Bevorzugt ist eine Variante, bei der die Bereitstellungsvorrichtung das Kennzeichnungselement reversibel beschreibt. Dann kann das Kennzeichnungselement später (für eine andere Werkstücksammeleinheit mit anderen Werkstücken) einfach wiederverwendet werden.

Besonders bevorzugt ist eine Variante, bei der die Bereitstellungsvorrichtung einen RFID-Chip des Kennzeichnungselements programmiert. Die Programmierung ist typischerweise reversibel, d.h. der RFID-Chip kann bei einer erneuten Verwendung des Kennzeichnungselements mit anderen Werkstücken neu programmiert werden. Die Programmierung enthält direkt oder indirekt die Informationen über die Werkstücke und kann von einem RFID-Lesegerät ausgelesen werden. Mittels RFID ist ein berührungsloses (meist auf einige Meter Entfernung) und von der Orientierung des Kennzeichnungsmittels weitgehend unabhängiges Auslesen des Kennzeichnungselements möglich.

Vorteilhaft ist auch eine Variante, bei der die Bereitstellungsvorrichtung das Kennzeichnungselement bedruckt. Ein Bedrucken ist vergleichsweise kostengünstig möglich. Die Bedruckung erfolgt bevorzugt reversibel, d.h. der das Kennzeichnungselement kann bei einer erneuten Verwendung des Kennzeichnungselement mit anderen Werkstücken (typischerweise nach geeigneter Reinigung) neu bedruckt werden.

### Varianten zur Funktion der Automatisierungsvorrichtung

Bei einer bevorzugten Variante ist vorgesehen, dass die Automatisierungsvorrichtung zumindest auf einem Teil der Werkstücksammeleinheiten jeweils einen Stapel von Werkstücken bildet und ein Kennzeichnungselement oben auf oder neben dem Stapel von Werkstücken ablegt,
insbesondere wobei zumindest ein Teil der Werkstücksammeleinheiten jeweils eine Palette oder einen Teilbereich einer Palette umfasst, auf der oder dem jeweils der Stapel gebildet wird. Durch die Bildung von Stapeln kann auf kompaktem Raum eine große Zahl von Teilen bevorratet und für eine automatische weitere Handhabung günstig bereitgehalten werden. Durch Anordnung des Kennzeichnungselements auf oder neben dem Stapel ist dieses meist leicht für Arbeiter lesbar und für maschinelle Lesegeräte auslesbar.

Ebenso bevorzugt ist eine Variante, bei der die Automatisierungsvorrichtung zumindest auf einem Teil der Werkstücksammeleinheiten jeweils einen Haufen von Werkstücken bildet und ein Kennzeichnungselement oben auf oder neben den Haufen von Werkstücken ablegt,
insbesondere wobei zumindest ein Teil der Werkstücksammeleinheiten einen Behälter, bevorzugt einen verschließbaren Behälter, umfasst, in welchem der Haufen gebildet wird. Mittels Behältern können große Mengen von typischerweise kleinen Teilen gut gehandhabt werden. Durch Anordnung des Kennzeichnungselements auf dem Haufen (meist im Behälterinneren) oder neben dem Haufen (meist außerhalb des Behälterinneren, etwa an einer besonderen Ablage seitlich am Behälter) ist dieses meist leicht für Arbeiter lesbar und für maschinelle Lesegeräte auslesbar.

Bevorzugt ist auch eine Variante, bei der die Automatisierungsvorrichtung Greifmittel aufweist, und die Greifmittel sowohl Werkstücke als auch Kennzeichnungselemente ergreifen, insbesondere wobei die Greifmittel die Werkstücke und die Kennzeichnungselemente jeweils ansaugen. Greifmittel sind universell einsetzbar und mechanisch schonend für die Werkstücke. Greifmittel werden typischerweise zum Stapeln von Werkstücken eingesetzt. Mit Sauggreifern können insbesondere Blechteile gut gehandhabt werden. Grundsätzlich werden dieselben Greifmittel für die Werkstücke und die Kennzeichnungselemente eingesetzt.

In einer anderen, bevorzugten Variante ist vorgesehen, dass die Automatisierungsvorrichtung einen Werkstückwagen umfasst, in den sowohl Werkstücke als auch Kennzeichnungselemente eingeworfen werden, insbesondere über einen Werkstücktrichter, und dass der Werkstückwagen zumindest über einem Teil der Werkstücksammeleinheiten verfährt und durch Öffnen eines Auswurfs die Werkstücke und die Kennzeichnungselemente über einer jeweiligen Werkstücksammeleinheit fallen lässt. Diese Variante ist mechanisch relativ einfach und daher kostengünstig; insbesondere braucht (neben Auswurfmechaniken) im Wesentlichen nur der Werkstückwagen bewegt zu werden, was meist mit einer einfachen linearen Achse erfolgen kann. Diese Variante eignet sich vor allem zur Bildung von Werkstückhaufen in Behältern.

Bevorzugt ist auch eine Variante, bei der das Kennzeichnungselement eine Karte, insbesondere eine Kunststoffkarte oder mit Kunststoff ummantelte Karte, aufweist. Bevorzugt weist die Karte wenigstens eine Fläche von 45 x 80 mm, bevorzugt wenigstens 50 mm x 90 mm auf. Die Karte ist deutlich schwerer als Papier bei gleicher Größe (Fläche), und geht entsprechend weniger leicht verloren. Die Karte ist typischerweise (reversibel) bedruckt und/oder enthält oder trägt einen RFID-Chip. Die Karte kann sowohl von einem Sauggreifer gehandhabt werden, als auch über Auswürfe und Werkstückwagen transportiert werden. Der Einsatz von Kunststoff ist kostengünstig und macht die Karte ausreichend robust für eine mehrfache Verwendung.

Die Kennzeichnungselemente können an eine Übergabezone verbracht und von dort durch die Automatisierungsvorrichtung zur zugehörigen Werkstücksammeleinheit transportiert werden.

### Erfindungsgemäße Produktionsstation

In den Rahmen der vorliegenden Erfindung fällt auch eine Produktionsstation für Werkstücke zur Durchführung eines erfindungsgemäßen, oben beschriebenen Verfahrens, umfassend
- eine Produktionsmaschine zum Produzieren einer Vielzahl von Werkstücken,
- eine Automatisierungsvorrichtung zum Verbringen der von der Produktionsmaschine produzierten Werkstücke zu Bereitstellungsorten für Werkstücksammeleinheiten,
- eine Steuerungsvorrichtung zum Ansteuern der Automatisierungsvorrichtung, so dass die produzierten Werkstücke sortiert auf die Bereitstellungsorte verteilt werden,
- eine Vielzahl von Kennzeichnungselementen in Form von Mobileinheiten zum Aussenden und Empfangen elektromagnetischer Signale an bzw. von Sende-Empfangseinheiten, um aus den Laufzeiten der elektromagnetischen Signale zwischen den Sende-Empfangseinheiten und den Kennzeichnungselementen die Position der Kennzeichnungselemente bestimmen zu können, wobei die Produktionsstation weiterhin umfasst
- eine Bereitstellungsvorrichtung zum Bereitstellen von Kennzeichnungselementen, wobei die von der Bereitstellungsvorrichtung bereitgestellten Kennzeichnungselemente direkt und/oder indirekt Informationen über jeweils den Bereitstellungsorten zusortierte Werkstücke tragen, und
- eine Beförderungseinheit zum Verbringen der mit der Bereitstellungsvorrichtung bereitgestellten Kennzeichnungselemente von der Bereitstellungsvorrichtung zur zugehörigen Werkstücksammeleinheit.

Mit der erfindungsgemäßen Produktionsstation können auf einfache und kostengünstige Weise Werkstücke gekennzeichnet werden. Die Produktionsstation kombiniert an einem Ort die Produktionsmaschine, die Bereitstellungsvorrichtung, die Beförderungseinheit, die Steuerungsvorrichtung und die Automatisierungsvorrichtung. Die Automatisierungsvorrichtung kann sowohl für den Transport der Werkstücke (von der Produktionsmaschine bzw. einem zugehören Auswurfplatz, etwa an einem Werkstücktrichter, zum Bereitstellungsort bzw. einer dort angeordneten Werkstücksammeleinheit) als auch für den Transport des Kennzeichnungselements (insbesondere von einer Übergabezone zum Bereitstellungsort bzw. einer dort angeordneten Werkstücksammeleinheit) eingesetzt werden. Mittels der Steuerungsvorrichtung kann die korrekte Zusortierung sowohl der Werkstücke als auch der Kennzeichnungselemente zu den Bereitstellungsorten organisiert werden. Diese synergetische doppelte Nutzung ist besonders effizient. Meist sind an einer Produktionsstation wenigstens fünf Bereitstellungsorte für Werkstücksammeleinheiten im Arbeitsraum der Automatisierungsvorrichtung vorgesehen.

Bei einer bevorzugten Ausführungsform der erfindungsgemäßen Produktionsstation umfasst die Bereitstellungsvorrichtung eine Schreibvorrichtung zum Beschreiben der bereitzustellenden Kennzeichnungselemente direkt mit den Informationen der jeweils den Bereitstellungsorten zusortierten Werkstücke und/oder mit einer Zuordnungskennzeichnung für diese Informationen. Mittels der Schreibvorrichtung können auf einfache und zuverlässige Weise die Informationen selbst und/oder die Zuordnungskennzeichnung auf dem Kennzeichnungselement aufgebracht werden. Das Beschreiben kann dabei körperlich und/oder elektronisch erfolgen.

Bevorzugt ist weiterhin eine Ausführungsform, die vorsieht, dass die Bereitstellungsvorrichtung umfasst
- eine Lesevorrichtung zum Auslesen von in den bereitzustellenden Kennzeichnungselementen fest hinterlegten Zuordnungskennzeichnungen,
- oder eine Bestimmungsvorrichtung zur Bestimmung der Position eines bereitzustellenden Kennzeichnungselements bezüglich einer bekannten Ordnung, in der Kennzeichnungselemente in einem Vorrat gelagert sind, insbesondere wobei die Kennzeichnungselemente des Vorrats einen Stapel bilden und die Bestimmungsvorrichtung eine Zählvorrichtung für von dem Stapel genommene Kennzeichnungselemente umfasst. Dadurch ist es möglich, bereits vorhandene, fest hinterlegte (eindeutige) Zuordnungskennzeichnungen zu ermitteln und (nach Zuordnung zu den Informationen über die Werkstücke) zu nutzen; eine Schreibvorrichtung ist nicht erforderlich. Lesevorrichtung und Bestimmungsvorrichtung sind Beispiele für eine Erkennungsvorrichtung, mit der bereits vorhandene feste Zuordnungskennzeichnungen von bevorrateten Kennzeichnungselementen ermittelt werden können.

Vorteilhaft ist eine Ausführungsform einer erfindungsgemäßen Produktionsstation, bei der die Beförderungsvorrichtung eine Rutsche umfasst, über die die bereitgestellten Kennzeichnungselemente insbesondere von der Bereitstellungsvorrichtung in die Übergabezone im Arbeitsbereich der Automatisierungsvorrichtung rutschen können. Die Rutsche ist ein besonders einfaches Mittel, um von der Bereitstellungsvorrichtung bereitgestellte Kennzeichnungselemente in den Arbeitsbereich der Automatisierungsvorrichtung zu leiten, so dass diese das Kennzeichnungselement zum Bereitstellungsort weiter transportieren kann. Insbesondere ist die Rutsche passiv und benötigt weder Energie noch eine Steuerung.

Bei einer bevorzugten Ausführungsform ist die Produktionsmaschine als eine Flachbettbearbeitungsmaschine oder Schneidmaschine, insbesondere Laserschneidmaschine, oder Stanzmaschine, oder eine kombinierte Schneid- und Stanzmaschine ausgebildet. Bei diesen Typen von Produktionsmaschinen werden aus einem Stück Rohmaterial (meist ein Metallblech) typischerweise mehrere verschiedene Typen von Werkstücken produziert, die dann an unterschiedlichen Werkstücksammeleinheiten gesammelt werden und unter Nutzung der Erfindung auf einfache Weise gekennzeichnet werden können.

Bei einer bevorzugten Ausführungsform ist die Produktionsmaschine als eine Biegemaschine ausgebildet.

Bei einer vorteilhaften Ausführungsform liegen die Kennzeichnungselemente auf angelieferten Werkstücksammeleinheiten und werden von einer Beförderungseinheit von den Werkstücksammeleinheiten zunächst in eine Bereitstellungsvorrichtung verbracht. Die Werkstücke werden, insbesondere von einer Automatisierungsvorrichtung, zu der Maschine befördert, dort bearbeitet, beispielsweise von einer Biegemaschine gebogen, und dann, insbesondere von einer Automatisierungsvorrichtung, zu einer weiteren Werkstücksammeleinheit verbracht. Die den Werkstücken zugeordneten Kennzeichnungselemente werden ebenfalls zu dieser Werkstücksammeleinheit verbracht.

Bei einer vorteilhaften Ausführungsform weisen die Kennzeichnungselemente jeweils einen RFID-Chip auf. Der RFID-Chip ist besonders leicht maschinell beschreibbar und auslesbar, insbesondere auch berührungslos und auf mittlere Entfernung (von bis zu einigen Metern). Dies erleichtert die Automatisierung von nachfolgenden Fertigungsprozessen mit den gekennzeichneten Werkstücken.

Bevorzugt ist auch eine Ausführungsform, die vorsieht, dass die Automatisierungsvorrichtung einen Sauggreifer aufweist, und dass die Kennzeichnungselemente einen ebenen Abschnitt zum Anlegen des Sauggreifers aufweisen, insbesondere wobei die Kennzeichnungselemente als Karten ausgebildet sind. Mit Sauggreifern kann eine vergleichsweise einfache und zuverlässige Handhabung der Werkstücke und Kennzeichnungselemente, insbesondere ohne Klemmachsen, erfolgen. Die Ausbildung eines ebenen Abschnitts am Kennzeichnungselement ist leicht möglich, wobei eine kompakte, flache Form der Kennzeichnungselemente eingerichtet werden kann, wie mit einer Karte.

Besonders bevorzugt ist eine Ausführungsform, bei der die Produktionsstation mehrere Werkstücksammeleinheiten umfasst, die jeweils an einem zugehörigen Bereitstellungsort angeordnet sind,
insbesondere wobei zumindest ein Teil der Werkstücksammeleinheiten als Palette und/oder Teilbereich einer Palette und/oder als Behälter für Werkstücke ausgebildet ist. Mittels der Werkstücksammeleinheiten können die dort jeweils abgelegten Werkstücke auf einfache Weise weiter gehandhabt werden, insbesondere mitsamt einer Palette oder einem Behälter zu einem Lager oder einer nächsten Fertigungsstation verfahren werden.

Eine vorteilhafte Weiterbildung dieser Ausführungsform sieht vor, dass die Produktionsstation wenigstens eine Werkstücksammeleinrichtung umfasst, die mehrere Werkstücksammeleinheiten umfasst, die über die Werkstücksammeleinrichtung gemeinsam transportierbar sind, insbesondere wobei die Werkstücksammeleinrichtung einen Rollwagen mit mehreren Behältern für Werkstücke und/oder Ablageplätzen für Stapel von Werkstücken, oder eine Palette mit mehreren Ablageplätzen für Stapel von Werkstücken umfasst. Mittels der Werkstücksammeleinrichtungen ist es möglich, eine größere Zahl von Werkstücksammeleinheiten auf einmal schnell auszutauschen, etwa wenn die Werkstücksammeleinheiten der Werkstücksammeleinrichtung voll sind.

Die Produktionsstation kann dazu ausgebildet sein, die Kennzeichnungselemente an eine Übergabezone zu transportieren und von dort durch die Automatisierungsvorrichtung zur zugehörigen Werkstücksammeleinheit zu transportieren.

Die Kennzeichnungselemente der Produktionsstation können zum Aussenden und Empfangen von elektromagnetischen Signalen in Form von Ultra-Wideband-Signalen (UWB) ausgebildet sein. Weiter bevorzugt weisen die Mobileinheiten jeweils ein Gehäuse in Form einer flachen Box auf.

Weitere Vorteile der Erfindung ergeben sich aus der Beschreibung und der Zeichnung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Darstellung einer ersten erfindungsgemäßen Produktionsstation, auf der eine erste Variante eines erfindungsgemäßen Verfahrens ablauft, mit einer als Laserschneidmaschine ausgebildeten Produktionsmaschine, wobei die produzierten Werkstücke gestapelt werden;
- Fig. 2: eine schematische Darstellung einer ersten erfindungsgemäßen Produktionsstation, auf der eine zweite Variante eines erfindungsgemäßen Verfahrens ablauft, mit einer als Stanzmaschine ausgebildeten Produktionsmaschine, wobei die produzierten Werkstücke in Behälter abgeworfen werden;
- Fig. 3: eine schematische, teilweise transparente Ansicht eines bedruckten Kennzeichnungselements für die Erfindung;
- Fig. 4: eine schematische, teilweise transparente Ansicht eines Kennzeichnungselements mit E-Ink-Anzeige für die Erfindung;
- Fig. 5: eine schematische Darstellung einer Bereitstellungsvorrichtung für die Erfindung, die mit einer Lesevorrichtung oder einer Zählvorrichtung ausgebildet ist;
- Fig. 6: eine schematische Darstellung einer Produktionshalle, wobei Fig. 6 die Lokalisierung eines Kennzeichnungselements in der Produktionshalle verdeutlicht.

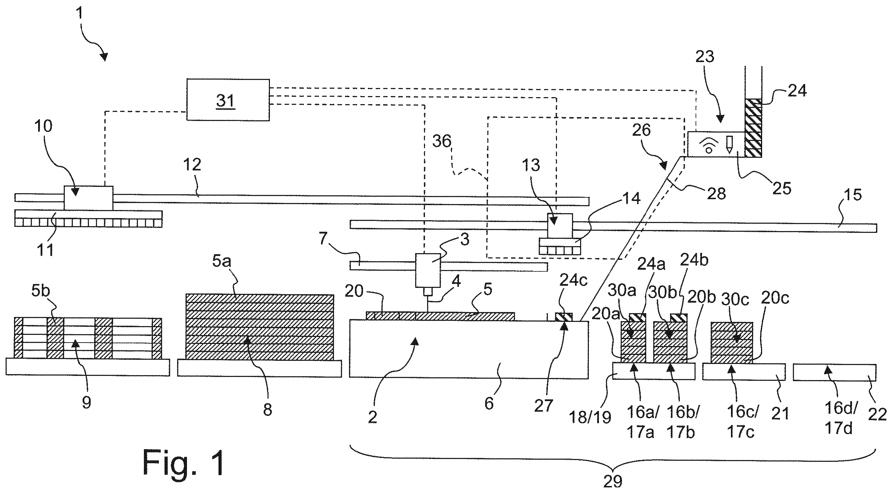

Die **Fig. 1** zeigt in einer schematischen Darstellung eine erste Ausführungsform einer erfindungsgemäßen Produktionsstation 1 zur Durchführung des erfindungsgemäßen Verfahrens.

Die Produktionsstation 1 umfasst eine Produktionsmaschine 2, hier eine Laserschneidmaschine mit einem Laserbearbeitungskopf 3. Der Laserbearbeitungskopf 3 emittiert während einer Laserbearbeitung einen Laserstrahl 4, der hier vertikal nach unten auf ein zu schneidendes Stück Rohmaterial 5 auf einem Tisch 6 gerichtet ist. Der Laserbearbeitungskopf 3 ist hier oberhalb des Tischs 6 mit einem Portalsystem 7 in einer horizontalen Ebene verfahrbar, um gewünschte Schneidkonturen von zu fertigenden Werkstücken 20 abzufahren. Alternativ könnte auch ein Oberteil des Tischs 6 zusammen mit dem Stück Rohmaterial 5 in einer horizontalen Ebene verfahrbar ausgebildet sein.

Noch ungeschnittene Stücke Rohmaterial 5a werden auf einem Rohmaterial-Stapel 8 neben dem Tisch 6 gelagert. Weiterhin werden Reststücke von Rohmaterial 5b, die nach dem Ausschneiden aller gewünschten Werkstücke verblieben sind, auf einem Restmaterial-Stapel 9 ebenfalls neben dem Tisch 6 gelagert. Mittels einer Ladevorrichtung 10 können ungeschnittene Stücke Rohmaterial 5a vom Rohmaterial-Stapel 8 auf den Tisch 6 verbracht werden, und Reststücke von Rohmaterial 5b vom Tisch 6 auf den Restmaterial-Stapel 9 verbracht werden. Die Ladevorrichtung 10 ist hier mit einem Sauggreifer 11, der mit einem Portalsystem 12 in einer horizontalen Ebene und auch vertikal verfahren werden kann, ausgebildet.

Mittels einer Automatisierungsvorrichtung 13 können weiterhin die geschnittenen Werkstücke 20 vom Tisch 6 zu Bereitstellungsorten 16a-16d transportiert werden, die neben dem Tisch 6 eingerichtet sind. Die Automatisierungsvorrichtung 13 verfügt dafür über einen Sauggreifer 14, der mittels eines Portalsystems 15 in einer horizontalen Ebene und auch in vertikaler Richtung verfahrbar ist.

Man beachte, dass die Automatisierungsvorrichtung 13 als Teil der Produktionsmaschine 2 aufgefasst werden kann. Entsprechendes gilt für die Ladevorrichtung 10.

An den Bereitstellungsorten 16a-16d sind Werkstücksammeleinheiten 17a-17d angeordnet. Die Werkstücksammeleinheit 17a ist hier als der linke Teilbereich einer Palette 18 ausgebildet, wo ein erster Typ von Werkstücken 20a gestapelt wird. Die Werkstücksammeleinheit 17b ist als der rechte Teilbereich der Palette 18 ausgebildet, wo ein zweiter Typ von Werkstücken 20b gestapelt wird. Die Palette 18 ist damit eine Werksstücksammeleinrichtung 19, auf der zwei Werkstücksammeleinheiten 17a, 17b ausgebildet sind. Die Werkstücksammeleinheit 17c ist als eine Palette 21 ausgebildet, auf der (nur) ein dritter Typ von Werkstücken 20c gestapelt wird. Die Werkstücksammeleinheit 17d ist ebenfalls mit einer Palette 22 ausgebildet, auf der aber bisher noch keine Werkstücke 20 angeordnet wurden. Man beachte, dass hier zur Vereinfachung nur vier Bereitstellungsorte 16a-16d eingezeichnet sind; in der Praxis sind meist wenigstens fünf Bereitstellungsorte eingerichtet.

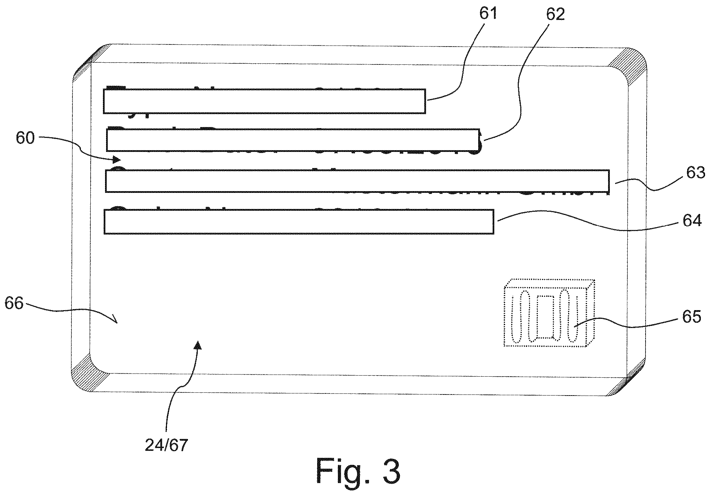

Die Produktionsstation 1 verfügt weiterhin über eine Bereitstellungsvorrichtung 23, an der dort bevorratete Kennzeichnungselemente 24 in der gezeigten Ausführungsform mit direkten Informationen (etwa einer Auftragsnummer, einem Teiletyp und einer Produktionszeit) jeweils über die Werkstücke 20a, 20b, 20c auf den Werkstücksammeleinheiten 17a, 17b, 17c beschrieben werden; die Bereitstellungsvorrichtung 23 umfasst hierfür eine Schreibvorrichtung 25. Die Schreibvorrichtung 25 bringt hier einen Aufdruck auf den Kennzeichnungselementen 24 an, und programmiert weiterhin RFID-Chips der Kennzeichnungselemente 24 (nicht näher dargestellt, vgl. aber hierzu Fig. 3). Die Bereitstellungsvorrichtung 23 beschreibt also ein Kennzeichnungselement 24 hier sowohl körperlich als auch elektronisch.

Die Bereitstellungsvorrichtung 23 ist über eine Beförderungsvorrichtung 26 an die Automatisierungsvorrichtung 13 gekoppelt. Bereitgestellte Kennzeichnungselemente 24 werden von der Bereitstellungsvorrichtung 23 ausgeworfen und rutschen über eine Rutsche 28 der Beförderungsvorrichtung 26 in eine Übergabezone 27, die innerhalb des Arbeitsraums 29 der Automatisierungsvorrichtung 13, also des hier für den Sauggreifer 13 erreichbaren Raumes, liegt. Vorliegend ist das Kennzeichnungselement 24c bereits in die Übergabezone 27 gerutscht. Mit der Automatisierungsvorrichtung 13 kann nun das Kennzeichnungselement 24c zu seinem zugehörigen Stapel 30c von Werkstücken 20c verbracht werden, und auf den Stapel 30c aufgelegt werden. Man beachte, dass auf den Stapeln 30a und 30b von Werkstücken 20a, 20b bereits auf diese Weise Kennzeichnungselemente 24a, 24b abgelegt wurden.

Nachdem die Stapel 30a, 30b, 30c von Werkstücken 20a, 20b, 20c vollständig gebildet wurden und auch die Kennzeichnungselemente 24a, 24b, 24c auf ihnen abgelegt wurden, werden die Werkstücksammeleinheiten 17a, 17b, 17c bzw. die Paletten 18, 21 gegen leere Werkstücksammeleinheiten bzw. leere Paletten getauscht (nicht näher dargestellt); die Paletten 18, 21 können in üblicher Weise hierzu gehandhabt werden, etwa mit einem Gabelstapler. Man beachte, dass mittels der Palette 18 hier gleichzeitig die beiden Stapel 30a und 30b gehandhabt werden können.

Die Ladevorrichtung 10, die Produktionsmaschine 2, die Automatisierungsvorrichtung 13 und die Bereitstellungsvorrichtung 23 werden dabei von einer Steuerungsvorrichtung 31 koordiniert (Soweit auch die Beförderungsvorrichtung 26 in anderen Ausführungsformen eine Ansteuerung benötigen sollte, kann auch die Beförderungsvorrichtung 26 von der Steuerungsvorrichtung 31 koordiniert werden). Die Steuerungsvorrichtung 31 legt insbesondere fest, wie die Werkstücke 20, 20a, 20b, 20c den Bereitstellungsorten 16a-16d zusortiert werden, und sorgt auch für die korrekte Zuordnung der Kennzeichnungselemente 24a, 24b, 24c. Die Steuerungsvorrichtung 31 stellt hier auch die werkstückbezogenen Informationen bereit, die von der Bereitstellungsvorrichtung 23 auf ein Kennzeichnungselement 24, 24a, 24b, 24c geschrieben werden und/oder diesen zugeordnet werden.

Man beachte, dass mittels der Bereitstellungsvorrichtung 23 bzw. der Schreibvorrichtung 25 anstelle oder zusätzlich zu den unmittelbaren Informationen über die Werkstücke auch eine Zuordnungskennzeichnung auf ein jeweiliges Kennzeichnungselement 24 geschrieben werden kann.

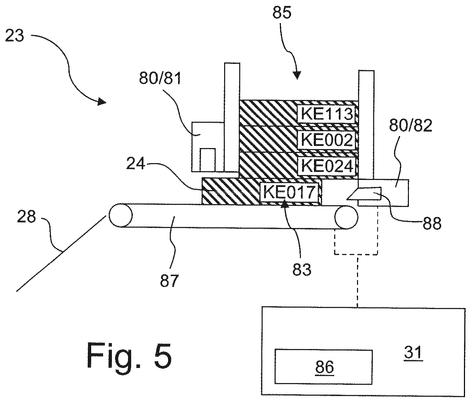

Die Bereitstellungsvorrichtung 23 kann auch dazu ausgestaltet sein, eine jeweilige bereits auf den bevorrateten Kennzeichnungselementen 24 (körperlich und/oder elektronisch) fest abgelegte, eindeutige Zuordnungskennzeichnung 83 zu ermitteln, vgl. **Fig. 5****,** etwa durch Auslesen oder Abzählen. Die Bereitstellungsvorrichtung 23 umfasst dann eine Ermittlungsvorrichtung 80, typischerweise in Gestalt einer Lesevorrichtung 81, die die Zuordnungskennzeichnungen 83 von bereitgestellten Kennzeichenelementen 24 hier beim Herausfahren auf einem Förderband 87 ausliest. Die Ermittlungsvorrichtung 80 kann auch in Gestalt einer Zählvorrichtung 82 (hier ausgebildet mit einem Drucktaster 88) ausgebildet sein, die mitzählt, welches Kennzeichnungselement 24 aus dem bevorrateten Stapel 85 von Kennzeichnungselementen 24 gerade herausgefahren wird, wobei die Abfolge von Zuordnungskennzeichnungen 83 im Stapel 85 bekannt ist. Die Bereitstellungsvorrichtung 23 kann auch mit einer Kombination aus einer Ermittlungsvorrichtung 80 und einer Schreibvorrichtung ausgestaltet sein (nicht dargestellt).

Die ermittelte Zuordnungskennzeichnung 83 wird in einer Datenbank 86 den Informationen über die Werkstücke auf der zugewiesenen Werkstücksammeleinheit zugeordnet, so dass diese Informationen mittels der Zuordnungskennzeichnung 83 leicht auffindbar bzw. abrufbar sind. Das Kennzeichnungselement 24 ruft dann typischerweise unmittelbar anschließend die eigentlichen Informationen über die Werkstücke mittels der Zuordnungskennzeichnung 83 aus der Datenbank 86 drahtlos ab. Ebenso können die eigentlichen Informationen später von Maschinen oder Menschen bei Bedarf mittels der Zuordnungskennzeichnung 83 abgerufen werden. Die Datenbank 86 kann zur Steuerung 31 gehören (wie dargestellt) oder als eine externe Datenbank ausgebildet sein. Entsprechendes gilt für den Fall einer mittels einer Schreibvorrichtung 25 einer Bereitstellungsvorrichtung 23 auf einem Kennzeichnungselement 24 aufgebrachten Zuordnungskennzeichnung 83 (vgl. Fig. 1).

Eine erfindungsgemäße Produktionsstation 1, wie in Fig. 1 dargestellt, kann insbesondere dadurch eingerichtet werden, dass eine vorhandene Produktionsanlage, die eine Produktionsmaschine 2, eine Ladevorrichtung 10, eine Automatisierungsvorrichtung 13 und eine Steuerungsvorrichtung 31 umfasst, mit einer Bereitstellungsvorrichtung 23 und einer Beförderungsvorrichtung 26 mit Übergabezone 27 im Arbeitsraum der Automatisierungsvorrichtung 13 nachgerüstet wird, und die Steuerungsvorrichtung 31 so umprogrammiert wird, dass sie auch die Zusortierung der Kennzeichnungselemente 24 mit übernimmt.

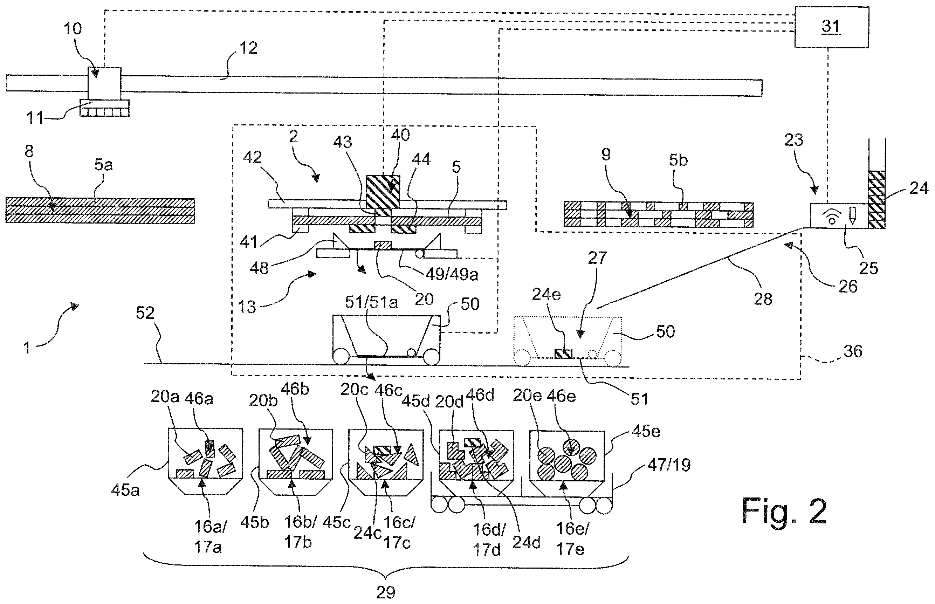

In den **Figuren 1** und **2** ist eine Beförderungseinheit 36 gezeigt. Die Beförderungseinheit 36 ist allgemein dazu ausgebildet, die Kennzeichnungselemente 24 von der Bereitstellungsvorrichtung 23 zu einer Werkstücksammeleinheit 17a-17e zu befördern. Die Beförderungseinheit 36 kann zumindest die Automatisierungsvorrichtung 13 und die Beförderungsvorrichtung 26 aufweisen.

Die **Fig. 2** zeigt eine weitere Ausführungsform einer erfindungsgemäßen Produktionsstation 1. Die Funktionsweise ist ähnlich zur Ausführungsform von Fig. 1, so dass nachfolgend vor allem die wesentlichen Unterschiede erläutert werden.

Bei der Produktionsstation 1 ist die Produktionsmaschine 2 als eine Stanzmaschine mit einem Stanzkopf 40 ausgebildet, mit dem Werkstücke 20 aus einem zu stanzenden Stück Rohmaterial 5 herausgestanzt werden können. Um das Stück Rohmaterial 5 für das Ausstanzen verschiedener Werkstücke 20 zu positionieren, ist das Stück Rohmaterial 5 mit einer Klemmvorrichtung 41 gehalten, die über ein Portalsystem 42 in einer horizontalen Ebene verfahren werden kann; zusätzlich kann das Stück Rohmaterial 5 auf einem Tisch gleitend abgestützt sein (nicht näher dargestellt). Das Stanzwerkzeug 43 und Stanzmatrize 44 der Stanzmaschine können für verschiedene Typen von zu stanzenden Werkstücken 20 getauscht werden (nicht näher dargestellt).

Mittels der Ladevorrichtung 10 können ungestanzte Stücken von Rohmaterial 5a vom Rohmaterial-Stapel 8 zur Klemmvorrichtung 41 verbracht werden, und Reststücke von Rohmaterial 5b können von der Klemmvorrichtung 41 zum Restmaterial-Stapel 9 verbracht werden.

Ausgestanzte Werkstücke 20 werden über die Automatisierungsvorrichtung 13 zu hier fünf Werkstücksammeleinrichtungen 17a-17e an Bereitstellungsorten 16a-16e verbracht, wobei die Werkstücksammeleinheiten 17a-17e hier als Behälter 45a-45e ausgebildet sind. Die Werkstücke 20a-20e in den Behältern 45a-45e bilden jeweils Haufen (Schüttungen) 46a-46e aus. Die Behälter 45d und 45e sind hier auf einem Rollwagen 47 angeordnet. Der Rollwagen 47 stellt somit eine Werkstücksammeleinrichtung 19 mit zwei Werkstücksammeleinheiten 17d, 17e dar.

Die Automatisierungsvorrichtung 13 weist hier einen Werkstücktrichter 48 auf, der einen bodenseitigen, mit einer Klappe 49a ausgebildeten Auswurf 49 ausbildet. Ein ausgestanztes Werkstück 20 bleibt zunächst auf der geschlossenen Klappe 49a liegen. Wenn ein Werkstückwagen 50 unterhalb des Auswurfs 49 positioniert ist, kann der Auswurf 49 geöffnet werden, und das Werkstück 20 (ggf. auch mehrere Werkstücke) fällt in den Werkstückwagen 50. Der Werkstückwagen 50 ist wiederum mit einem bodenseitigen, mit einer Klappe 51a ausgebildeten Auswurf 51 versehen. Der Werkstückwagen 50 ist oberhalb der Bereitstellungsorte 16a-16e bzw. der Werkstücksammeleinheiten 17a-17e auf einer hier horizontal verlaufenden Führung 52 verfahrbar, und kann über einem ausgewählten Bereitstellungsort 16a-16e positioniert werden. Sodann kann der Auswurf 51 geöffnet werden, und das Werkstück 20 (oder die Werkstücke) aus dem Werkstückwagen 50 fallen in den darunter stehenden Behälter 45a-45e am ausgewählten Bereitstellungsort 16a-16e. Vorliegend ist der Rollwagen 50 (in der nicht gepunkteten Darstellung) für eine Entgegennahme von Werkstücken 20 aus dem Werkstücktrichter 48, und auch für ein Fallenlasen von Werkstücken 20 in den mittleren Behälter 45c positioniert.

In einer hier äußerst rechten (gepunktet dargestellten) Verfahrposition des Werkstückwagens 50 kann ein Kennzeichnungselement 24, das hier in der Bereitstellungssvorrichtung 23 umfassend eine Schreibvorrichtung 25 mit direkten Informationen über die Werkstücke 20a-20e einer Werkstücksammeleinheit 17a-17e und/oder mit einer individuellen (einmalig vergebenen) Zuordnungskennzeichnung für diese Informationen beschrieben wurde, über die Rutsche 28 der Beförderungsvorrichtung 26 in den Werkstückwagen 50 rutschen. Das Innere des Werkstückwagens 50, wenn dieser an der hier äußerst rechten Position der Führung 52 angeordnet ist, bildet hier eine Übergabezone 27 für die Kennzeichnungselemente 24 im Arbeitsbereich 29 der Automatisierungsvorrichtung 13 aus. Mit dem Werkstückwagen 50 kann dann ein Kennzeichnungselement 24e über einen gewünschten Behälter 45a-45e gefahren werden, und durch Öffnen des Auswurfs 51 in diesen fallengelassen werden. Um hier das Kennzeichnungselement 24e in die zugehörige Werkstücksammeleinheit 17e fallen zu lassen, braucht der Werkstückwagen 50 nicht verfahren zu werden. Man beachte, dass hier bereits in die Behälter 45c und 45d Kennzeichnungselemente 24c, 24d zusortiert wurden.

Man beachte, dass die Rutsche 28 alternativ auch so eingerichtet werden kann, dass ein herabrutschendes Kennzeichnungselement 24 in den Werkstücktrichter 48 fällt (nicht dargestellt).

Die Steuervorrichtung 31 koordiniert wiederum die Ladevorrichtung 10, die Produktionsmaschine 2, die Automatisierungsvorrichtung 13 und die Bereitstellungsvorrichtung 23, um das Herstellen und Zusortieren der Werkstücke 20, 20a-20e und das Beschreiben bzw. Zuordnen und Zusortieren der Kennzeichnungselemente 24, 24c-24e zu bewirken. Die Automatisierungsvorrichtung 13 muss hier sowohl bezüglich der Verfahrposition des Werkstückwagens 50 als auch bezüglich des Öffnens (und Schließens) der Auswürfe 49, 51 angesteuert werden.

Die **Fig. 3** zeigt beispielhaft ein von einer Bereitstellungsvorrichtung bereitgestelltes Kennzeichnungselement 24 für die Erfindung. Das Kennzeichnungselement 24 ist hier als eine Karte 67 aus Kunststoff ausgebildet, hier mit ca. einer Länge von 90 mm, einer Breite von 50 mm und einer Dicke von 4 mm. Man beachte, dass die Dicke der Karte 67 meistens 1/10 oder weniger sowohl der Länge als auch der Breite der Karte 67 beträgt. In vielen Fällen kann auch eine Dicke der Karte 67 von 1,5 mm oder weniger eingerichtet werden. Meist ist die Karte 67 aber wenigstens 0,6 mm oder wenigstens 1,0 mm dick.

In der illustrierten Variante ist das Kennzeichnungselement 24 auf der Oberseite mit direkten Informationen 60 über die Werkstücke auf einer Werkstücksammeleinheit, der das Kennzeichnungselement 24 zugeordnet ist bzw. wird, von der Bereitstellungsvorrichtung bedruckt worden. Das Kennzeichnungselement 24 wird im Rahmen der Erfindung mit der Automatisierungsvorrichtung für die Werkstücke bei den Werkstücken auf der zugehörigen Werkstücksammeleinheit angeordnet.

Die aufgedruckten Informationen 60 umfassen hier eine Typennummer der Werkstücke 61, ein Produktionsdatum der Werkstücke 62, einen Namen eines auftraggebenden Kunden 63 sowie eine Auftragsnummer 64. Die aufgedruckten Informationen 60 sind für einen Menschen mit bloßem Auge gut lesbar.

Weiterhin ist hier in das Kennzeichnungselement 24, also in die Karte 67 aus Kunststoff, ein RFID-Chip 65 eingeschweißt. Der RFID-Chip 65 kann alternativ auch anderweitig am Kennzeichnungselement 24 befestigt werden, etwa aufgeklebt werden. Der RFID-Chip 65 wurde mit der Bereitstellungsvorrichtung hier mit denselben Informationen 60 über die Werkstücke auf der zugehörigen Werkstücksammeleinrichtung beschrieben (programmiert) wie bei der Bedruckung, so dass diese direkten Informationen 60 auch für ein maschinelles Auslesen, hier sogar ein berührungsloses Auslesen, mit einem RFID-Lesegerät zur Verfügung stehen.

Falls gewünscht, können die Informationen auf dem RFID-Chip 65 auch über die Informationen 60 der Bedruckung hinausgehen, und beispielsweise noch Angaben zu der bei der Fertigung der Werkstücke eingesetzten Produktionsstation enthalten.

Die Oberseite des Kennzeichnungselements 24 stellt einen ebenen Abschnitt 66 dar, an dem ein Sauggreifer zum Ergreifen und Transportieren des Kennzeichnungselements 24 angreifen kann. Entsprechendes gilt für die Unterseite.

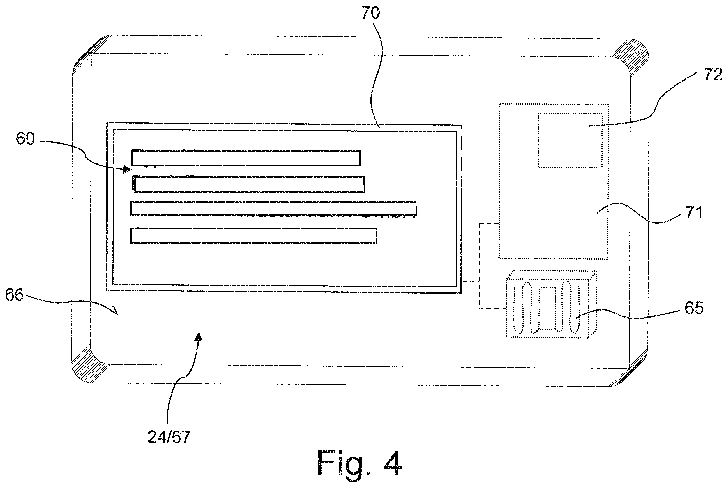

Alternativ kann das Kennzeichnungselement 24 auch eine Karte 67 mit einer elektronische veränderbaren Anzeige 70 für die Darstellung der Informationen 60 sein, vgl. **Fig. 4****.** Besonders sparsam im Leistungsverbrauch sind solche Karten 67, die als Anzeige 70 ein sogenanntes E-Papier (E-Ink) verwenden. Dies wird über eine Steuerungsmodul 71 des Kennzeichnungselements 24 angesteuert, das die Anzeige 70 verändern kann. Die dann statische Anzeige 70 selbst verbraucht keine elektrische Leistung. Das Steuerungsmodul 71 weist einen Empfänger 72 auf, der elektromagnetische Signale wie z.B. Funkwellen, Licht oder Infrarot empfängt. Mit den elektromagnetischen Signalen können die Informationen 60 dem Steuerungsmodul 71 insbesondere drahtlos überbracht (übermittelt) werden. Dieses kann die Informationen 60 für Menschen lesbar auf der E-Ink Anzeige 70 darstellen. Die Übermittlung der (direkten) Informationen 60 über die Werkstücke an das Kennzeichnungselement 24 kann in der Bereitstellungsvorrichtung erfolgen. Alternativ kann die Übermittlung der (direkten) Informationen 60 aber auch später, etwa in einer Werkhalle, über ein geeignetes Sendemodul (nicht dargestellt) erfolgen. Dabei kann eine eindeutige Zuordnung der Kennzeichnungselemente 24 mittels einer Zuordnungskennzeichnung (beispielsweise niedergelegt auf dem RFID-Chip 65) zu den zugehörigen Werkstücksammeleinheiten bzw. den entsprechenden Informationen 60 über die dortigen Werkstücke erfolgen. Eine solches Kennzeichnungselement 24 zeichnet sich durch eine sehr hohe Flexibilität aus.

Die beschriebenen Verfahren und Vorrichtungen sind insbesondere geeignet für biegefeste Werkstücke 20, 20a-e, so dass die hierin offenbarten Konzepte und deren Anwendung in den hierin beschriebenen Vorrichtungen auch besonders geeignet für das Kennzeichnen von biegefesten Werkstücken sein können. Ein biegefestes Werkstück kann beispielsweise aus Blech, Glas oder Kunststoff sein. Ferner sind aus einem Halbleitersubstrat oder einer Leiterplatte geschnittene (oder gestanzte) Teile oft biegefest.

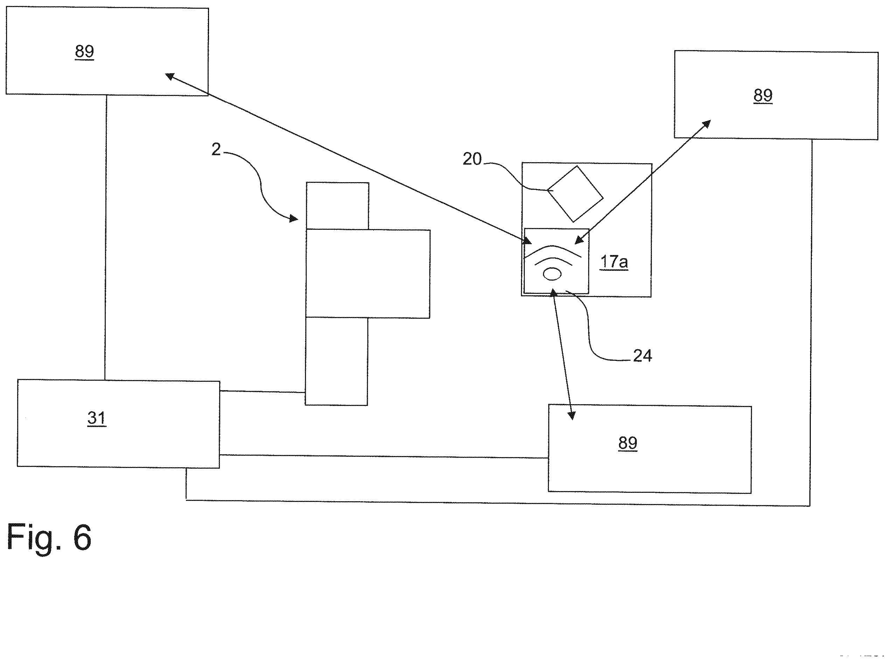

Die **Fig. 6** zeigt eine schematische Draufsicht auf eine Produktionshalle. In der Produktionshalle ist eine Produktionsmaschine 2 angeordnet. Die Produktionsmaschine 2 wird von einer Steuerungsvorrichtung 31 gesteuert. Die Steuerungsvorrichtung 31 steuert weiterhin Sende-Empfangseinheiten 89. Die Sende-Empfangseinheiten 89 sind in der Lage, elektromagnetische Signale (in Fig. 6 durch Doppelpfeile dargestellt) mit einem Kennzeichnungselement 24 in Form einer Mobileinheit auszutauschen. Das Kennzeichnungselement 24 ist in, an oder auf einer Werkstücksammeleinheit 17a angeordnet. Die Werkstücksammeleinheit 17a weist weiterhin ein Werkstück 20 auf. Mittels des Kennzeichnungselements 24 ist nun das Werkstück 20 mittelbar genau lokalisierbar. Befindet sich das Kennzeichnungselement 24 in der Nähe der Produktionsmaschine 2 kann die Steuerungsvorrichtung 31 die Produktionsmaschine 2 zur Bearbeitung des Werkstücks 20 ansteuern bzw. buchen. Das von der Automatisierungsvorrichtung 13 (in Fig. 6 nicht gezeigt) der Werkstücksammeleinheit 17a zugeordnete Kennzeichnungselement 24 ist somit in der Lage, die Produktion insgesamt transparenter und effektiver zu gestalten.

Unter Vornahme einer Zusammenschau aller Figuren der Zeichnung betrifft die Erfindung zusammenfassend ein Verfahren zur Kennzeichnung von Werkstücken 20, 20a-20e gemäß Patentanspruch 1, wobei eine Produktionsmaschine 2 eine Vielzahl von Werkstücken 20, 20a-20e produziert und die produzierten Werkstücke 20, 20a-20e sortiert auf mehrere Werkstücksammeleinheiten 17a-17e verteilt werden, wobei die produzierten Werkstücke 20, 20a-20e mit einer Automatisierungsvorrichtung 13 zu den Werkstücksammeleinheiten 17a-17e verbracht werden, und wobei auf den Werkstücksammeleinheiten 17a-17e Kennzeichnungselemente 24, 24a-24e in Form von Mobileinheiten zum Aussenden und Empfangen von elektromagnetischen Signalen an bzw. von Sende-Empfangseinheiten 89 angeordnet werden, um aus Laufzeiten der elektromagnetischen Signale zwischen den Sende-Empfangseinheiten 89 und den Kennzeichnungselementen 24, 24a-e die Position der Kennzeichnungselemente 24, 24a-e bestimmen zu können, wobei die Kennzeichnungselemente 24, 24a-e jeweils direkt und/oder indirekt Informationen 60 über die Werkstücke 20, 20a-20e auf den Werkstücksammeleinheiten 17a-17e tragen, wobei die von einer Bereitstellungsvorrichtung 23 bereitgestellten Kennzeichnungselemente 24, 24a-24e, die jeweils direkt und/oder indirekt Informationen 60 über die Werkstücke 20, 20a-20e auf den Werkstücksammeleinheiten 17a-17e tragen, durch eine Beförderungseinheit 36 vom Ort einer Bereitstellungsvorrichtung 23 zur zugehörigen Werkstücksammeleinheit 17a-17e gebracht werden. Das Befördern erfolgt insbesondere an eine Übergabezone 27 im Arbeitsbereich 29 der Automatisierungsvorrichtung 13, wobei die Automatisierungsvorrichtung 13 ein jeweiliges bereitgestelltes Kennzeichnungselement 24, 24a-24e vorzugsweise von der Übergabezone 27 zur zugehörigen Werkstücksammeleinheit 17a-17e verbringt. Die Erfindung ermöglicht es, auf einfache und kostengünstige Weise Werkstücke 20, 20a-20e zu kennzeichnen, um sie in Echtzeit lokalisieren zu können.

## Patentansprüche

1. Verfahren zur Kennzeichnung von Werkstücken (20, 20a-20e), wobei eine Produktionsmaschine (2) eine Vielzahl von Werkstücken (20, 20a-20e) produziert und die produzierten Werkstücke (20, 20a-20e) sortiert auf mehrere Werkstücksammeleinheiten (17a-17e) verteilt werden,
wobei die produzierten Werkstücke (20, 20a-20e) mit einer Automatisierungsvorrichtung (13) zu den Werkstücksammeleinheiten (17a-17e) verbracht werden,
**dadurch gekennzeichnet, dass** an den Werkstücksammeleinheiten (17a-17e) Kennzeichnungselemente (24, 24a-24e) angeordnet werden, die jeweils direkt und/oder indirekt Informationen (60) über die Werkstücke (20, 20a-20e) auf den Werkstücksammeleinheiten (17a-17e) tragen, wobei die von einer Bereitstellungsvorrichtung (23) bereitgestellten Kennzeichnungselemente (24, 24a-24e) vom Ort der Bereitstellungsvorrichtung (23) zur zugehörigen Werkstücksammeleinheit (17a-17e) mittels einer Beförderungseinheit (36) verbracht werden, wobei die Kennzeichnungselemente (24, 24a-24e) in Form von Mobileinheiten zum Aussenden und Empfangen von elektromagnetischen Signalen an bzw. von Sende-Empfangseinheiten (89) ausgebildet sind, um aus Laufzeiten der elektromagnetischen Signale zwischen den Sende-Empfangseinheiten (89) und den Kennzeichnungselementen (24, 24a-e) die Position der Kennzeichnungselemente (24, 24a-e) zu bestimmen,
wobei die Bereitstellungsvorrichtung (23) das Kennzeichnungselement (24, 24a-24e) für Menschen lesbar beschreibt,
wobei das für Menschen lesbare Beschreiben durch entsprechendes Ansteuern einer elektronischen Anzeige erfolgt.

2. Verfahren nach Anspruch 1, bei dem die von der Bereitstellungsvorrichtung (23) bereitgestellten Kennzeichnungselemente (24, 24a-24e) jeweils eine individuelle Zuordnungskennzeichnung (83) tragen,
wobei in einer Datenbank (86) den Zuordnungskennzeichnungen (83) der bereitgestellten oder bereitzustellenden Kennzeichnungselemente (24, 24a-24e) jeweils die Informationen (60) über die Werkstücke (20, 20a-20e) auf den Werkstücksammeleinheiten (17a-17e) zugeordnet werden.

3. Verfahren nach Anspruch 2, bei dem mittels der Bereitstellungsvorrichtung (23) jeweils eine auf den bereitzustellenden Kennzeichnungselementen (24, 24a-24e) fest hinterlegte Zuordnungskennzeichnung (83) ausgelesen wird.

4. Verfahren nach Anspruch 2 oder 3, bei dem die Bereitstellungsvorrichtung (23) die bereitzustellenden Kennzeichnungselemente (24, 24a-24e) einem Vorrat entnimmt, in welchem Kennzeichnungselemente (24, 24a-24e) mit bekannten, fest hinterlegten Zuordnungskennzeichnungen (83) in einer bekannten Ordnung gelagert sind, insbesondere wobei die Kennzeichnungselemente (24, 24a-24e) des Vorrats einen Stapel (85) bilden,
und dass eine Zuordnungskennzeichnung (83) für ein bereitzustellendes Kennzeichnungselement (24, 24a-24e) mittels einer Entnahmeinformation ermittelt wird, wobei die Entnahmeinformation die Position des bereitzustellenden Kennzeichnungselements (24, 24a-24e) bezüglich der bekannten Ordnung beschreibt, insbesondere wobei die Entnahmeinformation ein Zählindex der von dem Stapel (85) genommenen Kennzeichnungselemente (24, 24a-24e) ist.

5. Verfahren nach einem der vorhergehenden Ansprüche, bei dem die Bereitstellungsvorrichtung (23) das Kennzeichnungselement (24, 24a-24e) maschinenlesbar beschreibt.

6. Verfahren nach einem der vorhergehenden Ansprüche, bei dem die Bereitstellungsvorrichtung (23) das Kennzeichnungselement (24, 24a-24e) reversibel beschreibt.

7. Verfahren nach einem der vorhergehenden Ansprüche, bei dem die Kennzeichnungselemente (24, 24a-24e) an eine Übergabezone (27) im Arbeitsbereich (29) der Automatisierungsvorrichtung (13) verbracht werden, und wobei die Automatisierungsvorrichtung (13) ein jeweiliges bereitgestelltes Kennzeichnungselement (24, 24a-24e) von der Übergabezone (27) zur zugehörigen Werkstücksammeleinheit (17a-17e) verbringt.

8. Verfahren nach einem der vorhergehenden Ansprüche, bei dem die Automatisierungsvorrichtung (13) zumindest auf einem Teil der Werkstücksammeleinheiten (17a-17e) jeweils einen Stapel (30a-30c) von Werkstücken (20, 20a-20e) bildet und ein Kennzeichnungselement (24, 24a-24e) oben auf oder neben dem Stapel (30a-30c) von Werkstücken (20, 20a-20e) ablegt,
insbesondere wobei zumindest ein Teil der Werkstücksammeleinheiten (17a-17e) jeweils eine Palette (18, 21, 22) oder einen Teilbereich einer Palette (18, 21, 22) umfasst, auf der oder dem jeweils der Stapel (30a-30c) gebildet wird.

9. Verfahren nach einem der vorhergehenden Ansprüche, bei dem die Automatisierungsvorrichtung (13) zumindest auf einem Teil der Werkstücksammeleinheiten (17a-17e) jeweils einen Haufen (46a-46e) von Werkstücken (20, 20a-20e) bildet und ein Kennzeichnungselement (24, 24a-24e) oben auf oder neben den Haufen (46a-46e) von Werkstücken (20, 20a-20e) ablegt,
insbesondere wobei zumindest ein Teil der Werkstücksammeleinheiten (17a-17e) einen Behälter (45a-45e), bevorzugt einen verschließbaren Behälter (45a-45e), umfasst, in welchem der Haufen (46a-46e) gebildet wird.

10. Verfahren nach einem der vorhergehenden Ansprüche, bei dem die Automatisierungsvorrichtung (13) Greifmittel aufweist, und die Greifmittel sowohl Werkstücke (20, 20a-20e) als auch Kennzeichnungselemente (24, 24a-24e) ergreifen,
insbesondere wobei die Greifmittel die Werkstücke (20, 20a-20e) und die Kennzeichnungselemente (24, 24a-24e) jeweils ansaugen.

11. Verfahren nach einem der vorhergehenden Ansprüche, bei dem die Automatisierungsvorrichtung (13) einen Werkstückwagen (50) umfasst, in den sowohl Werkstücke (20, 20a-20e) als auch Kennzeichnungselemente (24, 24a-24e) eingeworfen werden, insbesondere über einen Werkstücktrichter (48),
und dass der Werkstückwagen (50) zumindest über einem Teil der Werkstücksammeleinheiten (17a-17e) verfährt und durch Öffnen eines Auswurfs (51) die Werkstücke (20, 20a-20e) und die Kennzeichnungselemente (24, 24a-24e) über einer jeweiligen Werkstücksammeleinheit (17a-17e) fallen lässt.

12. Verfahren nach einem der vorhergehenden Ansprüche, bei dem die Kennzeichnungselemente (24, 24a-e) zum Aussenden und Empfangen von elektromagnetischen Signalen in Form von Ultra-Wideband-Signalen ausgebildet sind.

13. Verfahren nach einem der vorhergehenden Ansprüche, bei dem elektromagnetische Signale zwischen zumindest einem Kennzeichnungselement (24, 24a-e) und einer Sende-Empfangseinheit (89) übermittelt werden, wobei anhand der Laufzeiten der elektromagnetischen Signale zwischen den Sende-Empfangseinheiten (89) und dem Kennzeichnungselement (24, 24a-e) die Position des Kennzeichnungselements (24, 24a-e) bestimmt wird.

14. Produktionsstation (1) für Werkstücke (20, 20a-20e) zur Durchführung eines Verfahrens nach einem der vorhergehenden Ansprüche, umfassend
- eine Produktionsmaschine (2) zum Produzieren einer Vielzahl von Werkstücken (20, 20a-20e),
- eine Automatisierungsvorrichtung (13) zum Verbringen der von der Produktionsmaschine (2) produzierten Werkstücke (20, 20a-20e) zu Bereitstellungsorten (16a-16e) für Werkstücksammeleinheiten (17a-17e),
- eine Steuerungsvorrichtung (31) zum Ansteuern der Automatisierungsvorrichtung (13), so dass die produzierten Werkstücke (20, 20a-20e) sortiert auf die Bereitstellungsorte (16a-16e) verteilt werden,
- eine Vielzahl von Kennzeichnungselementen (24, 24a-24e), wobei die Kennzeichnungselemente (24, 24a-24e) in Form von Mobileinheiten zum Aussenden und Empfangen von elektromagnetischen Signalen an bzw. von Sende-Empfangseinheiten (89) ausgebildet sind, um aus Laufzeiten der elektromagnetischen Signale zwischen den Sende-Empfangseinheiten (89) und den Kennzeichnungselementen (24, 24a-e) die Position der Kennzeichnungselemente (24, 24a-e) zu bestimmen,
- eine Bereitstellungsvorrichtung (23) zum Bereitstellen von Kennzeichnungselementen (24, 24a-24e), wobei die von der Bereitstellungsvorrichtung (23) breitgestellten Kennzeichnungselemente (24, 24a-24e) jeweils direkt und/oder indirekt Informationen (60) über jeweils den Bereitstellungsorten (16a-16e) zusortierte Werkstücke (20, 20a-20e) tragen, und
- eine Beförderungseinheit (36) zum Verbringen der mit der Bereitstellungsvorrichtung (23) bereitgestellten Kennzeichnungselemente (24, 24a-24e) von der Bereitstellungsvorrichtung (23) zu den Bereitstellungsorten (16a-16e),
und wobei die Steuerungsvorrichtung (31) weiterhin ausgebildet ist zum Ansteuern der Beförderungseinheit (36), so dass die von der Bereitstellungsvorrichtung (23) bereitgestellten Kennzeichnungselemente (24, 24a-24e) dem jeweiligen Bereitstellungsort (16a-16e) der Werkstücke (20, 20a-20e), über die sie direkt und/oder indirekt Informationen (60) tragen, zusortiert werden.

15. Produktionsstation (1) nach Anspruch 14, bei der die Bereitstellungsvorrichtung (23) eine Schreibvorrichtung (25) zum Beschreiben der bereitzustellenden Kennzeichnungselemente (24, 24a-24e) direkt mit den Informationen (60) der jeweils den Bereitstellungsorten (16a-16e) zusortierten Werkstücke (20, 20a-20e) und/oder mit einer Zuordnungskennzeichnung (83) für diese Informationen (60) umfasst.

16. Produktionsstation (1) nach Anspruch 14 oder 15, bei der die Bereitstellungsvorrichtung (23) umfasst
- eine Lesevorrichtung (81) zum Auslesen von in den bereitzustellenden Kennzeichnungselementen (24, 24a-24e) fest hinterlegten Zuordnungskennzeichnungen (83),
- und/oder eine Bestimmungsvorrichtung zur Bestimmung der Position eines bereitzustellenden Kennzeichnungselements (24, 24a-24e) bezüglich einer bekannten Ordnung, in der Kennzeichnungselemente (24, 24a-24e) in einem Vorrat gelagert sind, insbesondere wobei die Kennzeichnungselemente (24, 24a-24e) des Vorrats einen Stapel (85) bilden und die Bestimmungsvorrichtung eine Zählvorrichtung (82) für von dem Stapel (85) genommene Kennzeichnungselemente (24, 24a-24e) umfasst.

17. Produktionsstation (1) nach einem der Ansprüche 14 bis 16, wobei die Beförderungseinheit (36) umfasst:
- die Automatisierungsvorrichtung (13) und
- eine Beförderungsvorrichtung (26) zum Verbringen der mit der Bereitstellungsvorrichtung (23) bereitgestellten Kennzeichnungselemente (24, 24a-24e) von der Bereitstellungsvorrichtung (23) zu einer Übergabezone (27) im Arbeitsbereich (29) der Automatisierungsvorrichtung (13),
wobei die Automatisierungsvorrichtung (13) weiterhin ausgebildet ist zum Verbringen der bereitgestellten Kennzeichnungselemente (24, 24a-24e) von der Übergabezone (27) zu den Bereitstellungsorten (16a-16e), und wobei die Steuerungsvorrichtung (31) weiterhin ausgebildet ist zum Ansteuern der Automatisierungsvorrichtung (13), so dass die von der Bereitstellungsvorrichtung (23) bereitgestellten Kennzeichnungselemente (24, 24a-24e) dem jeweiligen Bereitstellungsort (16a-16e) der Werkstücke (20, 20a-20e), über die sie direkt und/oder indirekt Informationen (60) tragen, zusortiert werden.

18. Produktionsstation (1) nach einem der Ansprüche 14 bis 17, bei der die Beförderungsvorrichtung (26) eine Rutsche (28) umfasst, über die die bereitgestellten Kennzeichnungselemente (24, 24a-24e) von der Bereitstellungsvorrichtung (23) in die Übergabezone (27) im Arbeitsbereich (29) der Automatisierungsvorrichtung (13) rutschen können.

19. Produktionsstation (1) nach einem der Ansprüche 14 bis 18, bei der die Produktionsmaschine (2) als eine Flachbettbearbeitungsmaschine oder Schneidmaschine, insbesondere Laserschneidmaschine, oder Stanzmaschine, oder eine kombinierte Schneid- und Stanzmaschine oder Biegemaschine ausgebildet ist.

20. Produktionsstation (1) nach einem der Ansprüche 14 bis 19, bei der die Automatisierungsvorrichtung (13) einen Sauggreifer (14) aufweist, und dass die Kennzeichnungselemente (24, 24a-24e) einen ebenen Abschnitt (66) zum Anlegen des Sauggreifers (14) aufweisen, insbesondere wobei die Kennzeichnungselemente (24, 24a-24e) in Form eines flachen Kastens ausgebildet sind.

21. Produktionsstation (1) nach einem der Ansprüche 14 bis 20, bei der die Produktionsstation (1) mehrere Werkstücksammeleinheiten (17a-17e) umfasst, die jeweils an einem zugehörigen Bereitstellungsort (16a-16e) angeordnet sind,
insbesondere wobei zumindest ein Teil der Werkstücksammeleinheiten (17a-17e) als Palette (18, 21, 22) und/oder Teilbereich einer Palette (18, 21, 22) und/oder als Behälter (45a-45e) für Werkstücke (20, 20a-20e) ausgebildet ist.

22. Produktionsstation (1) nach Anspruch 21, bei der die Produktionsstation (1) wenigstens eine Werkstücksammeleinrichtung (19) umfasst, die mehrere Werkstücksammeleinheiten (17a-17e) umfasst, die über die Werkstücksammeleinrichtung (19) gemeinsam transportierbar sind, insbesondere wobei die Werkstücksammeleinrichtung (19) einen Rollwagen (47) mit mehreren Behältern (45a-45e) für Werkstücke (20, 20a-20e) und/oder Ablageplätzen für Stapel (30a-30c) von Werkstücken (20, 20a-20e), oder eine Palette (18, 21, 22) mit mehreren Ablageplätzen für Stapel (30a-30c) von Werkstücken (20, 20a-20e) umfasst.

## Claims

1. A method for the identification of workpieces (20, 20a-20e), wherein a production machine (2) produces a plurality of workpieces (20, 20a-20e) and the produced workpieces (20, 20a-20e) are sorted and distributed to a plurality of workpiece collection units (17a-17e),
wherein the produced workpieces (20, 20a-20e) are transported to the workpiece collection units (17a-17e) using an automation device (13),
**characterized in that** identification elements (24, 24a-24e) are arranged on the workpiece collection units (17a-17e), and each of which directly and/or indirectly sends information (60) about the workpieces (20, 20a-20e) to the workpiece collection units (17a-17e),
wherein the identification elements (24, 24a-24e) provided by a supply device (23) are transported from the location of the supply device (23) to the associated workpiece collection unit (17a-17e) by means of a transport unit (36),
wherein the identification elements (24, 24a-24e) are designed in the form of mobile units for transmitting and receiving electromagnetic signals to and from transceiver units (89) in order to determine the position of the identification elements (24, 24a-e) from the transit times of the electromagnetic signals between the transceiver units (89) and the identification elements (24, 24a-e),
wherein the supply device (23) describes the identification element (24, 24a-24e) in a manner readable by humans,
wherein the human-readable description is effected by controlling an electronic display correspondingly.

2. The method according to claim 1, in which each identification element (24, 24a-24e) provided by the supply device (23) has an individual assignment identification (83),
wherein each assignment identification (83) of the identification elements (24, 24a-24e), which is provided or which needs to be provided, in a database (86) is assigned with the information (60) regarding the workpieces (20, 20a-20e) in the workpiece collection units (17a-17e).

3. The method according to claim 2, in which an assignment identification (83) permanently stored in the identification elements (24, 24a-24e) to be respectively provided is read out using the supply device (23).

4. The method according to claim 2 or 3, in which the supply device (23) removes the identification elements (24, 24a-24e) to be provided from a stock in which identification elements (24, 24a-24e) with known, permanently stored assignment identifications (83) are stored in a known order, in particular wherein the identification elements (24, 24a-24e) of the stock form a stack (85),
and wherein an assignment identification (83) for an identification element (24, 24a-24e) to be provided is determined using removal information, wherein the removal information describes the position of the identification element (24, 24a-24e) to be provided with respect to the known order, in particular wherein the removal information is a counter index of the identification elements (24, 24a-24e) taken from the stack (85).

5. The method according to one of the preceding claims, in which the supply device (23) describes the identification element (24, 24a-24e) in a machine-readable format.

6. The method according to one of the preceding claims, in which the supply device (23) describes the identification element (24, 24a-24e) in a reversible format.

7. The method according to one of the preceding claims, in which the identification elements (24, 24a-24e) are transferred to a transfer zone (27) in the working area (29) of the automation device (13), and wherein the automation device (13) transfers a respective identification element (24, 24a-24e) provided from the transfer zone (27) to the associated workpiece collection unit (17a-17e).

8. The method according to one of the preceding claims, wherein the automation device (13) forms a stack (30a-30c) of workpieces (20, 20a-20e) on at least one part each of the workpiece collection units (17a-17e) and places an identification element (24, 24a-24e) on top of or next to the stack (30a-30c) of workpieces (20, 20a-20e),
in particular wherein at least one part each of the workpiece collection units (17a-17e) comprises a pallet (18, 21, 22) or a sub-area of a pallet (18, 21, 22) on which the respective stack (30a-30c) is formed.

9. The method according to one of the preceding claims, wherein the automation device (13) forms a pile (46a-46e) of workpieces (20, 20a-20e) on at least one part each of the workpiece collection units (17a-17e) and places an identification element (24, 24a-24e) on top of or next to the pile (46a-46e) of workpieces (20, 20a-20e),
in particular, wherein at least a part of the workpiece collection units (17a-17e) comprises a container (45a-45e), preferably a closable container (45a-45e), in which the pile (46a-46e) is formed.

10. The method according to one of the preceding claims, in which the automation device (13) has gripping aids, and the gripping aids grip both workpieces (20, 20a-20e) and identification elements (24, 24a-24e),
in particular, wherein the gripping aids suck up the workpieces (20, 20a-20e) and the identification elements (24, 24a-24e) respectively.

11. The method according to one of the preceding claims, in which the automation device (13) comprises a workpiece trolley (50) in which workpieces (20, 20a-20e) and identification elements (24, 24a-24e) are thrown, in particular through a workpiece funnel (48),
and wherein the workpiece trolley (50) travels over at least a part of the workpiece collection units (17a-17e) and, by opening an ejector (51), ejects the workpieces (20, 20a-20e) and the identification elements (24, 24a-24e) above a respective workpiece collection unit (17a-17e).

12. The method according to one of the preceding claims, in which the identification elements (24, 24a-e) are designed to transmit and receive electromagnetic signals in the form of ultra-wideband signals.

13. The method according to one of the preceding claims, in which electromagnetic signals are transmitted between at least one identification element (24, 24a-e) and a transceiver unit (89), wherein the position of the identification element (24, 24a-e) is determined using the transit times of the electromagnetic signals between the transceiver units (89) and the identification element (24, 24a-e).

14. A production station (1) for workpieces (20, 20a-20e) for executing a method according to one of the preceding claims, comprising
- a production machine (2) for producing a plurality of workpieces (20, 20a-20e),
- an automation device (13) for transferring the workpieces (20, 20a-20e) produced by the production machine (2) to supply locations (16a-16e) for workpiece collection units (17a-17e),
- a control device (31) for controlling the automation device (13) so that the produced workpieces (20, 20a-20e) are sorted and distributed to the supply locations (16a-16e),
- a plurality of identification elements (24, 24a-24e), wherein the identification elements (24, 24a-24e) are designed in the form of mobile units for transmitting and receiving electromagnetic signals to and from transceiver units (89) in order to determine the position of the identification elements (24, 24a-e) from the transit times of the electromagnetic signals between the transceiver units (89) and the identification elements (24, 24a-e),
- a supply device (23) for providing identification elements (24, 24a-24e), wherein each identification element (24, 24a-24e) provided by the supply device (23) directly and/or indirectly carries information (60) regarding workpieces (20, 20a-20e) sorted to the respective supply locations (16a-16e), and
- a transport unit (36) for transferring the identification elements (24, 24a-24e) provided by the supply device (23) from the supply device (23) to the supply locations (16a-16e),
and wherein the control device (31) is further designed to control the transport unit (36) so that the identification elements (24, 24a-24e) provided by the supply device (23) are sorted to the respective supply location (16a-16e) of the workpieces (20, 20a-20e) that is used by these workpieces to carry information (60) directly and/or indirectly.

15. The production station (1) according to claim 14, in which the supply device (23) comprises a writing device (25) for writing the identification elements (24, 24a-24e) to be supplied directly with the information (60) of the workpieces (20, 20a-20e) sorted to the respective supply locations (16a-16e) and/or with an assignment identification (83) for this information (60).

16. The production station (1) according to claim 14 or 15, in which the supply device (23) comprises
- a reading device (81) for reading the assignment identifications (83) that are permanently stored in the identification elements (24, 24a-24e) to be provided,
- and/or a determination device for determining the position of an identification element (24, 24a-24e) to be provided with respect to a known order in which identification elements (24, 24a-24e) are stored in a stock, in particular wherein the identification elements (24, 24a-24e) of the stock form a stack (85) and the determining device comprises a counting device (82) for identification elements (24, 24a-24e) taken from the stack (85).

17. The production station (1) according to one of claims 14 to 16, wherein the transport unit (36) comprises:
- the automation device (13) and
- a transport device (26) for transferring the identification elements (24, 24a-24e) provided by the supply device (23) from the supply device (23) to a transfer zone (27) in the working area (29) of the automation device (13),
wherein the automation device (13) is further designed to transport the provided identification elements (24, 24a-24e) from the transfer zone (27) to the supply locations (16a-16e), and wherein the control device (31) is further designed to control the automation device (13) so that the identification elements (24, 24a-24e) provided by the supply device (23) are sorted to the respective supply location (16a-16e) of the workpieces (20, 20a-20e) that is used by these workpieces to carry information (60) directly and/or indirectly.

18. The production station (1) according to one of claims 14 to 17, in which the transport device (26) comprises a chute (28) through which the provided identification elements (24, 24a-24e) can slide from the supply device (23) into the transfer zone (27) in the working area (29) of the automation device (13).

19. The production station (1) according to one of claims 14 to 18, in which the production machine (2) is designed as a flatbed processing machine or a cutting machine, in particular a laser cutting machine, or a punching machine, or a combined cutting and punching machine or a bending machine.

20. The production station (1) according to one of claims 14 to 19, in which the automation device (13) has a suction gripper (14), and in which the identification elements (24, 24a-24e) have a leveled section (66) for applying the suction gripper (14), in particular wherein the identification elements (24, 24a-24e) are designed in the form of a flat box.

21. The production station (1) according to one of claims 14 to 20, in which the production station (1) comprises a plurality of workpiece collection units (17a-17e), each of which is arranged at an associated supply location (16a-16e), in particular wherein at least a part of the workpiece collection units (17a-17e) is designed as pallets (18, 21, 22) and/or sub-area of a pallet (18, 21, 22) and/or as containers (45a-45e) for workpieces (20, 20a-20e).

22. The production station (1) according to claim 21, in which the production station (1) comprises at least one workpiece collection device (19) comprising a plurality of workpiece collection units (17a-17e) that can be transported together via the workpiece collection device (19), in particular wherein the workpiece collection device (19) comprises a trolley (47) with a plurality of containers (45a-45e) for workpieces (20, 20a-20e) and/or storage locations for stacks (30a-30c) of workpieces (20, 20a-20e), or a pallet (18, 21, 22) with a plurality of storage locations for stacks (30a-30c) of workpieces (20, 20a-20e).

## Revendications

1. Procédé de marquage de pièces (20, 20a-20e), dans lequel une machine de production (2) produit une pluralité de pièces (20, 20a-20e) et les pièces (20, 20a-20e) produites sont distribuées triées vers plusieurs unités de collecte de pièces (17a-17e),
dans lequel les pièces (20, 20a-20e) produites sont acheminées vers les unités de collecte de pièces (17a-17e) au moyen d'un dispositif d'automatisation (13), **caractérisé en ce qu'**au niveau des unités de collecte de pièces (17a-17e) sont disposés des éléments de marquage (24, 24a-24e) qui portent chacun directement et/ou indirectement des informations (60) relatives aux pièces (20, 20a-20e) sur les unités de collecte de pièces (17a-17e),
dans lequel les éléments de marquage (24, 24a-24e) fournis par un dispositif de mise à disposition (23) sont acheminés depuis l'emplacement du dispositif de mise à disposition (23) vers l'unité de collecte de pièces (17a-17e) associée au moyen d'une unité de transport (36),
dans lequel les éléments de marquage (24, 24a-24e) sont conçus sous la forme d'unités mobiles pour l'émission et la réception de signaux électromagnétiques en provenance ou à destination d'unités émettrices-réceptrices (89), afin de déterminer, à partir des temps de propagation des signaux électromagnétiques entre les unités émettrices-réceptrices (89) et les éléments de marquage (24, 24a-e), la position des éléments de marquage (24, 24a-e),
dans lequel le dispositif de mise à disposition (23) inscrit l'élément de marquage (24, 24a-24e) de manière lisible pour l'homme, dans lequel l'inscription lisible pour l'homme est effectuée par commande appropriée d'un affichage électronique.

2. Procédé selon la revendication 1, dans lequel les éléments de marquage (24, 24a-24e) fournis par le dispositif de mise à disposition (23) portent chacun un identifiant d'attribution (83) individuel,
dans lequel, dans une base de données (86), les identifiants d'attribution (83) des éléments de marquage (24, 24a-24e) fournis ou à fournir sont associés respectivement aux informations (60) relatives aux pièces (20, 20a-20e) sur les unités de collecte de pièces (17a-17e).

3. Procédé selon la revendication 2, dans lequel respectivement un identifiant d'attribution (83) préenregistré sur les éléments de marquage (24, 24a-24e) à fournir est lu au moyen du dispositif de mise à disposition (23).

4. Procédé selon la revendication 2 ou 3, dans lequel le dispositif de mise à disposition (23) prélève les éléments de marquage (24, 24a-24e) à fournir dans un stock, au sein duquel des éléments de marquage (24, 24a-24e) dotés d'identifiants d'attribution (83) connus, préenregistrés, sont stockés dans un ordre connu, en particulier dans lequel les éléments de marquage (24, 24a-24e) du stock forment une pile (85),
et dans lequel un identifiant d'attribution (83) pour un élément de marquage (24, 24a-24e) à fournir est déterminé au moyen d'une information de prélèvement, dans lequel l'information de prélèvement décrit la position de l'élément de marquage (24, 24a-24e) à fournir par rapport à l'ordre connu, en particulier dans lequel l'information de prélèvement est un indice de comptage des éléments de marquage (24, 24a-24e) pris de la pile (85).

5. Procédé selon l'une quelconque des revendications précédentes, dans lequel le dispositif de mise à disposition (23) inscrit l'élément de marquage (24, 24a-24e) de façon lisible par machine.

6. Procédé selon l'une quelconque des revendications précédentes, dans lequel le dispositif de mise à disposition (23) inscrit l'élément de marquage (24, 24a-24e) de manière réversible.

7. Procédé selon l'une quelconque des revendications précédentes, dans lequel les éléments de marquage (24, 24a-24e) sont acheminés vers une zone de transfert (27) au niveau de la zone de travail (29) du dispositif d'automatisation (13), et dans lequel le dispositif d'automatisation (13) transporte un élément de marquage (24, 24a-24e) fourni depuis la zone de transfert (27) vers l'unité de collecte de pièces (17a-17e) associée.

8. Procédé selon l'une quelconque des revendications précédentes, dans lequel le dispositif d'automatisation (13) forme sur au moins une partie des unités de collecte de pièces (17a-17e) respectivement une pile (30a-30c) de pièces (20, 20a-20e) et dépose un élément de marquage (24, 24a-24e) sur ou à côté de la pile (30a-30c) de pièces (20, 20a-20e),
en particulier dans lequel au moins une partie des unités de collecte de pièces (17a-17e) comprend chacune une palette (18, 21, 22) ou une section d'une palette (18, 21, 22) sur laquelle ou lequel, respectivement, la pile (30a-30c), est formée.

9. Procédé selon l'une quelconque des revendications précédentes, dans lequel le dispositif d'automatisation (13) forme sur au moins une partie des unités de collecte de pièces (17a-17e) respectivement un tas (46a-46e) de pièces (20, 20a-20e) et dépose un élément de marquage (24, 24a-24e) sur ou à côté du tas (46a-46e) de pièces (20, 20a-20e),
en particulier dans lequel au moins une partie des unités de collecte de pièces (17a-17e) comprend un conteneur (45a-45e), de préférence un conteneur (45a-45e) fermable, au sein duquel le tas (46a-46e) est formé.

10. Procédé selon l'une quelconque des revendications précédentes, dans lequel le dispositif d'automatisation (13) comporte des moyens de préhension, et les moyens de préhension saisissent à la fois les pièces (20, 20a-20e) et les éléments de marquage (24, 24a-24e),
en particulier dans lequel les moyens de préhension aspirent respectivement les pièces (20, 20a-20e) et les éléments de marquage (24, 24a-24e).

11. Procédé selon l'une quelconque des revendications précédentes, dans lequel le dispositif d'automatisation (13) comprend un chariot de pièces (50) dans lequel sont déversés à la fois les pièces (20, 20a-20e) et les éléments de marquage (24, 24a-24e), en particulier via une trémie de pièces (48),
et dans lequel le chariot de pièces (50) se déplace au moins au-dessus d'une partie des unités de collecte de pièces (17a-17e) et, par l'ouverture d'un orifice d'éjection (51), laisse tomber les pièces (20, 20a-20e) et les éléments de marquage (24, 24a-24e) au-dessus d'une unité de collecte de pièces (17a-17e) respective.

12. Procédé selon l'une quelconque des revendications précédentes, dans lequel les éléments de marquage (24, 24a-e) sont conçus pour l'émission et la réception des signaux électromagnétiques sous forme de signaux à ultra-large bande.

13. Procédé selon l'une quelconque des revendications précédentes, dans lequel des signaux électromagnétiques sont transmis entre au moins un élément de marquage (24, 24a-e) et une unité émettrice-réceptrice (89), dans lequel, sur la base des temps de propagation des signaux électromagnétiques entre les unités émettrices-réceptrices (89) et l'élément de marquage (24, 24a-e), la position de l'élément de marquage (24, 24a-e) est déterminée.

14. Station de production (1) pour pièces (20, 20a-20e) pour la mise en œuvre d'un procédé selon l'une quelconque des revendications précédentes, comprenant
- une machine de production (2) pour produire une pluralité de pièces (20, 20a-20e),
- un dispositif d'automatisation (13) pour acheminer les pièces (20, 20a-20e) produites par la machine de production (2) vers des emplacements de mise à disposition (16a-16e) pour des unités de collecte de pièces (17a-17e),
- un dispositif de commande (31) pour commander le dispositif d'automatisation (13), de sorte que les pièces (20, 20a-20e) produites soient distribuées triées vers les emplacements de mise à disposition (16a-16e),
- une pluralité d'éléments de marquage (24, 24a-24e), dans lesquels les éléments de marquage (24, 24a-24e) sont conçus sous la forme d'unités mobiles pour l'émission et la réception de signaux électromagnétiques en provenance ou à destination d'unités émettrices-réceptrices (89), afin de déterminer, à partir des temps de propagation des signaux électromagnétiques entre les unités émettrices-réceptrices (89) et les éléments de marquage (24, 24a-e), la position des éléments de marquage (24, 24a-e),
- un dispositif de mise à disposition (23) pour fournir des éléments de marquage (24, 24a-24e), dans lequel les éléments de marquage (24, 24a-24e) fournis par le dispositif de mise à disposition (23) portent respectivement directement et/ou indirectement des informations (60) relatives aux pièces (20, 20a-20e) attribuées respectivement aux emplacements de mise à disposition (16a-16e), et
- une unité de transport (36) pour acheminer les éléments de marquage (24, 24a-24e) fournis par le dispositif de mise à disposition (23) depuis le dispositif de mise à disposition (23) vers les emplacements de mise à disposition (16a-16e),
et dans lequel le dispositif de commande (31) est en outre conçu pour commander l'unité de transport (36), de sorte que les éléments de marquage (24, 24a-24e) fournis par le dispositif de mise à disposition (23) soient attribués à l'emplacement de mise à disposition (16a-16e) respectif des pièces (20, 20a-20e) dont ils portent directement et/ou indirectement les informations (60).

15. Station de production (1) selon la revendication 14, dans lequel le dispositif de mise à disposition (23) comprend un dispositif d'écriture (25) pour inscrire directement sur les éléments de marquage (24, 24a-24e) à fournir les informations (60) des pièces (20, 20a-20e) attribuées respectivement aux emplacements de mise à disposition (16a-16e) et/ou un identifiant d'attribution (83) pour ces informations (60).

16. Station de production (1) selon la revendication 14 ou 15, dans lequel le dispositif de mise à disposition (23) comprend
- un dispositif de lecture (81) pour lire les identifiants d'attribution (83) préenregistrés dans les éléments de marquage (24, 24a-24e) à fournir,
- et/ou un dispositif de détermination pour déterminer la position d'un élément de marquage (24, 24a-24e) à fournir par rapport à un ordre connu dans lequel des éléments de marquage (24, 24a-24e) sont stockés dans un stock, en particulier dans lequel les éléments de marquage (24, 24a-24e) du stock forment une pile (85) et le dispositif de détermination comprend un dispositif de comptage (82) pour les éléments de marquage (24, 24a-24e) pris de la pile (85).

17. Station de production (1) selon l'une quelconque des revendications 14 à 16, dans laquelle l'unité de transport (36) comprend :
- le dispositif d'automatisation (13) et
- un dispositif de transport (26) pour acheminer les éléments de marquage (24, 24a-24e) fournis par le dispositif de mise à disposition (23) depuis le dispositif de mise à disposition (23) vers une zone de transfert (27) au niveau de la zone de travail (29) du dispositif d'automatisation (13),
dans lequel le dispositif d'automatisation (13) est en outre conçu pour acheminer les éléments de marquage (24, 24a-24e) fournis depuis la zone de transfert (27) vers les emplacements de mise à disposition (16a-16e), et dans lequel le dispositif de commande (31) est en outre conçu pour commander le dispositif d'automatisation (13), de sorte que les éléments de marquage (24, 24a-24e) fournis par le dispositif de mise à disposition (23) soient attribués à l'emplacement de mise à disposition (16a-16e) respectif des pièces (20, 20a-20e) dont ils portent directement et/ou indirectement les informations (60).

18. Station de production (1) selon l'une quelconque des revendications 14 à 17, dans laquelle le dispositif de transport (26) comprend une goulotte (28) par laquelle les éléments de marquage (24, 24a-24e) fournis par le dispositif de mise à disposition (23) peuvent glisser dans la zone de transfert (27) au niveau de la zone de travail (29) du dispositif d'automatisation (13).

19. Station de production (1) selon l'une quelconque des revendications 14 à 18, dans laquelle la machine de production (2) est conçue comme une machine d'usinage à plat ou machine de découpe, en particulier une machine de découpe laser, ou une poinçonneuse, ou une machine combinée de découpe et poinçonnage, ou une machine de pliage.

20. Station de production (1) selon l'une quelconque des revendications 14 à 19, dans laquelle le dispositif d'automatisation (13) comporte un préhenseur par aspiration (14), et dans laquelle les éléments de marquage (24, 24a-24e) présentent une section plane (66) pour l'application du préhenseur par aspiration (14), en particulier dans laquelle les éléments de marquage (24, 24a-24e) sont conçus sous la forme d'un boîtier plat.

21. Station de production (1) selon l'une quelconque des revendications 14 à 20, dans laquelle la station de production (1) comprend plusieurs unités de collecte de pièces (17a-17e), qui sont disposées chacune à un emplacement de mise à disposition (16a-16e) associé,
en particulier dans laquelle au moins une partie des unités de collecte de pièces (17a-17e) est conçue comme une palette (18, 21, 22) et/ou une section d'une palette (18, 21, 22) et/ou comme un conteneur (45a-45e) pour pièces (20, 20a-20e).

22. Station de production (1) selon la revendication 21, au sein de laquelle la station de production (1) comprend au moins un dispositif de collecte de pièces (19), qui comprend plusieurs unités de collecte de pièces (17a-17e), lesquelles peuvent être transportées ensemble via le dispositif de collecte de pièces (19), en particulier dans laquelle le dispositif de collecte de pièces (19) comprend un chariot roulant (47) équipé de plusieurs conteneurs (45a-45e) pour pièces (20, 20a-20e) et/ou de plusieurs emplacements de dépôt pour des piles (30a-30c) de pièces (20, 20a-20e), ou une palette (18, 21, 22) avec plusieurs emplacements de dépôt pour des piles (30a-30c) de pièces (20, 20a-20e).
